# EUROPEAN PATENT APPLICATION

(11) **EP 4 733 972 A1**
(43) Date of publication of application: **29.04.2026**
(21) Application number: 24906048.4
(22) Date of filing: 29.11.2024
(51) Int. Cl.: G06F 21/60

(54) **PERMISSION MANAGEMENT METHOD, ELECTRONIC DEVICE AND SERVER**

(30) Priority: 18.12.2023 CN 202311754662
(71) Applicant: Huawei Technologies Co., Ltd., Shenzhen, Guangdong 518129 (CN)
(72) Inventor: CUI, Nan, Shenzhen, Guangdong 518129 (CN); FANG, Xiwen, Shenzhen, Guangdong 518129 (CN); PAN, Shiran, Shenzhen, Guangdong 518129 (CN); YANG, Zongjun, Shenzhen, Guangdong 518129 (CN); JIN, Liang, Shenzhen, Guangdong 518129 (CN)
(74) Representative: Epping - Hermann - Fischer
(86) International application number: PCT/CN2024/135703
(87) International publication number: WO 2025/130563

(57) **Abstract**

This application provides a permission management method, an electronic device, and a server. In the method, a first electronic device sets a permission for a first file in the first electronic device to a first permission in response to a first operation of a user, and the first electronic device determines a second file based on setting the permission for the first file to the first permission, where the second file is a file related to the first file. The first electronic device triggers to set a permission for the second file. According to this design, after the user sets the permission for the first file, the first electronic device may determine the second file related to the first file, and trigger to set the permission for the second file. In this way, the user does not need to manually set permissions for a plurality of related files in sequence, enabling synchronized permission management on the related files, improving file permission management, and ensuring user data security.

## Description

### CROSS-REFERENCE TO RELATED APPLICATIONS

This application claims priority to Chinese Patent Application No. 202311754662.3, filed with the China National Intellectual Property Administration on December 18, 2023 and entitled "PERMISSION MANAGEMENT METHOD, ELECTRONIC DEVICE, AND SERVER", which is incorporated herein by reference in its entirety.

### TECHNICAL FIELD

This application relates to the field of internet technologies, and in particular, to a permission management method, an electronic device, and a server.

### BACKGROUND

With the advent of the information era, a large quantity of files are generated in daily production and life scenarios. This poses a higher requirement on a file management capability of an electronic device. A user requires strict permission control on a file of the user, to prevent data leakage. However, in a current file management manner, permission setting can be performed only on a single file. For example, it is assumed that the electronic device stores a copy of the file, and the user sets a permission for the original file but does not set a permission for the copy of the file. In this case, the user cannot perform permission control on content of the file. In conclusion, a current file management solution has a problem of insufficient permission control.

### SUMMARY

This application provides a permission management method, an electronic device, and a server, to provide a convenient permission management manner for a related file, so as to improve of file permission management.

According to a first aspect, this application provides a permission management method. The method may be performed by a first electronic device. The method includes: The first electronic device sets a permission for a first file in the first electronic device to a first permission in response to a first operation of a user; the first electronic device determines a second file based on setting the permission for the first file to the first permission, where the second file is a file related to the first file; and the first electronic device triggers to set a permission for the second file.

In the foregoing method, after the user sets the permission for the first file, the first electronic device may determine the second file related to the first file, and trigger to set the permission for the second file. In this way, the user does not need to manually set permissions for a plurality of related files in sequence, enabling synchronized permission management on the related files, improving file permission management, and ensuring user data security.

In a possible design, determining the second file based on setting the permission for the first file to the first permission includes: after setting the permission for the first file to the first permission, determining, according to a preset rule, the second file that is the same as or similar to the first file.

According to this design, after setting the permission for the first file to the first permission based on the operation of the user, the first electronic device may search, according to the preset rule, for the second file that is the same as or similar to the first file, to determine whether the file related to the first file exists, so as to ensure comprehensiveness of permission management.

In a possible design, triggering to set the permission for the second file includes: triggering to set the permission for the second file to the first permission; or triggering to set the permission for the second file to a second permission, where the second permission is a permission set by the user or a permission configured by a system.

Optionally, the second permission may be the same as or different from the first permission. When the second permission is different from the first permission, the second permission may be a permission related to the first permission. For example, the second permission may be a subset of the first permission.

According to this design, the first electronic device may directly set the permission for the second file to the first permission or the permission configured by the system, or may trigger a message for reminding the user to set the permission for the second file, and the user sets the permission for the second file, to flexibly implement permission management on a related file.

In a possible design, determining the second file based on setting the permission for the first file to the first permission includes: determining the second file in at least one candidate file in response to a second operation of the user, where the at least one candidate file is a file related to the first file.

Optionally, the second operation may be an operation of selecting the second file from the at least one candidate file by the user.

According to this design, the first electronic device may determine the at least one candidate file related to the first file, and the user may select the second file from the at least one candidate file, so that the first electronic device may set the permission for the second file selected by the user, to meet a requirement of the user for synchronously setting permissions for a plurality of related files.

In a possible design, the at least one candidate file includes at least one of the following: a file related to the first file in the first electronic device and a file related to the first file in a second electronic device.

According to this design, the file that is related to the first file and that is determined by the first electronic device may be a file in this device, or may be a file in another device, so that the file related to the first file can be searched for more comprehensively, thereby implementing cross-device file permission management.

In a possible design, the method further includes: determining at least one candidate file from at least one to-be-compared file based on a file feature of the first file, where a similarity between a file feature of the at least one candidate file and the file feature of the first file meets a preset condition, and the at least one to-be-compared file is from at least one of the first electronic device, the second electronic device, and a server.

According to this design, the first electronic device may perform file feature comparison on the at least one to-be-compared file based on the file feature of the first file, to determine the file related to the first file. In the permission management method provided in this application, the at least one to-be-compared file may be from at least one of the first electronic device, the second electronic device, and the server, so that cross-device similar file retrieval can be implemented, thereby further ensuring user data security.

In a possible design, determining the at least one candidate file from the at least one to-be-compared file based on the file feature of the first file includes: determining, based on a first file feature of the first file, at least one to-be-determined file from the at least one file stored in the first electronic device; and determining a ninth file from the at least one to-be-determined file based on a second file feature of the first file, where the ninth file is one of the at least one candidate file.

According to this design, when determining the at least one candidate file related to the first file, the first electronic device may perform two-step file feature comparison based on the first file feature and the second file feature of the first file, to improve accuracy of similar file retrieval.

Optionally, the first file feature may be a file feature that is easily obtained compared with the second file feature.

Optionally, when determining the at least one candidate file related to the first file, the first electronic device may alternatively perform one-step comparison based on the first file feature of the first file to obtain the at least one candidate file, so that the first electronic device does not need to extract and store the second file feature of the first file and a second file feature of the to-be-compared file, thereby saving computing power and storage space of the first electronic device.

In a possible design, the file feature of the first file includes at least one of the following: a key character, a keyword, an optical character recognition OCR feature, a picture feature, a file paragraph feature, and a long text feature.

In a possible design, the method further includes: sending a first message to the server or the second electronic device, where the first message is used to request to determine a file related to the first file; and receiving information that is about a fourth file and that is sent by the server or the second electronic device, where the fourth file is one of the at least one candidate file.

According to this design, the first electronic device may further send the first message to the server or the second electronic device, to request the server or the second electronic device to determine the file related to the first file, thereby implementing cross-device related file retrieval, further improving file permission management, and ensuring user data security.

In a possible design, the information about the fourth file includes at least one of the following: a file identifier of the fourth file, a file digest of the fourth file, and data of the fourth file.

According to this design, after determining the fourth file related to the first file, the server or the second electronic device may send the information about the fourth file to the first electronic device, for example, the file identifier, the file digest, or the data of the fourth file, so that the first electronic device can determine the file that is in the second electronic device and that is related to the first file.

In a possible design, the method further includes: sending a first message to the server or the second electronic device, where the first message is used to request to determine a file related to the first file; receiving information that is about a fifth file and that is sent by the server or the second electronic device; and determining, based on the file feature of the first file and the information about the fifth file, that the fifth file is one of the at least one candidate file.

According to this design, after requesting the server or the second electronic device to determine the file related to the first file, the first electronic device receives the fifth file sent by the server or the second electronic device, and then the first electronic device may perform file feature comparison on the fifth file based on the file feature of the first file, to determine that the fifth file is a file related to the first file, thereby further improving accuracy of file retrieval.

In a possible design, triggering to set the permission for the second file includes: setting the permission for the second file; or sending a second message to the server or the second electronic device, where the second message is used to request to set the permission for the second file.

According to this design, when the second file belongs to the first electronic device, the first electronic device may set the permission for the second file. When the second file belongs to the second electronic device, the first electronic device may send the second message to the server or the second electronic device, to request to set the permission for the second file, to implement file permission management of the first electronic device and cross-device file permission management.

In a possible design, before triggering to set the permission for the second file, the method further includes: displaying a first reminder message, where the first reminder message is used to query whether to synchronously set the permission for the second file.

According to this design, before setting the permission for the second file, the first electronic device may display the reminder message to query the user whether to set the permission for the second file, and set the permission for the second file after the user determines that the permission for the second file needs to be set, thereby improving user experience.

In a possible design, the first reminder message includes information about the second file and information about an electronic device to which the second file belongs.

According to this design, the first electronic device may display, in the reminder message, the information about the second file and the information about the electronic device to which the second file belongs, so that the user can intuitively view the file and a location of the file. This helps the user determine files whose permissions are to be synchronously set, thereby improving user experience.

In a possible design, the method further includes: determining that a third electronic device is online, and a sixth file in the third electronic device is a file related to the first file; and triggering to set a permission for the sixth file.

According to this design, when determining that the third electronic device is online, the first electronic device may trigger to set the permission for the sixth file related to the first file in the third electronic device, to further improve cross-device file permission management and ensure user data security.

In a possible design, before triggering to set the permission for the sixth file, the method further includes: displaying a second reminder message, where the second reminder message is used to query whether to set the permission for the sixth file.

In a possible design, the method further includes: setting the permission for the first file to a third permission in response to a third operation of the user; and triggering to set the permission for the second file.

Optionally, the third operation may be an operation triggered by the user to modify the permission for the first file.

According to this design, after the user modifies the permission for the first file, the first electronic device may trigger permission setting for the second file, to synchronously perform permission management on related files.

In a possible design, the second file belongs to the first electronic device, and the method further includes: setting the permission for the second file to a fourth permission in response to a fourth operation of the user.

According to this design, after the first electronic device triggers to set the permission for the second file, the user may further modify the permission for the second file again, to flexibly meet a permission management requirement of the user.

In a possible design, the method further includes: triggering to set the permission for the first file.

Optionally, before triggering to set the permission for the first file, the method further includes: displaying a fourth reminder message, where the fourth reminder message is used to query whether to set the permission for the first file.

According to this design, after the user modifies the permission for the second file, the first electronic device may further trigger to set the permission for the first file, to synchronously perform permission management on related files.

In a possible design, the method further includes: receiving a third message sent by the third electronic device, where the third message is used to request to determine a file related to a seventh file in the third electronic device; determining, based on a file feature of the seventh file, a file related to the seventh file from files stored in the first electronic device; and sending information about a file related to the seventh file to the third electronic device.

According to this design, the first electronic device may further receive the third message sent by another electronic device, for example, the third electronic device, to determine the file that is in the first electronic device and that is related to the seventh file in the third electronic device, to assist the third electronic device in performing cross-device file permission management.

In a possible design, the method further includes: receiving a fourth message sent by the third electronic device, where the fourth message is used to request to set a permission for an eighth file in the first electronic device to a fifth permission; and setting the permission for the eighth file to the fifth permission.

According to this design, the first electronic device may receive the fourth message sent by another electronic device, for example, the third electronic device, to set the permission for the eighth file that is in the first electronic device and that is related to the seventh file, to assist the third electronic device in completing cross-device file permission management, and ensure user data security.

Optionally, the first electronic device, the second electronic device, and the third electronic device may be electronic devices associated with a same user account.

According to a second aspect, this application provides a permission management method. The method may be performed by a server. The method includes: A server receives a first message sent by a first electronic device, where the first message is used to request to determine a file related to a first file in the first electronic device; and the server sends information about a fourth file to the first electronic device, where the fourth file is the file related to the first file.

In the foregoing method, the server may receive the message that is sent by the first electronic device and that is for requesting to determine the file related to the first file, and send the determined information about the fourth file related to the first file to the first electronic device, to assist the first electronic device in completing cross-device related file retrieval, to implement cross-device file permission synchronization management, and to ensure user data security.

In a possible design, the information about the fourth file includes at least one of the following: a file identifier of the fourth file, a file digest of the fourth file, and data of the fourth file.

In a possible design, the method further includes: receiving a second message sent by the first electronic device, where the second message is used to request to set a permission for a second file; and sending a fifth message to a second electronic device, where the fifth request message is used to request to set a permission for the second file, and the second electronic device is an electronic device to which the second file belongs.

According to this design, the server may receive the message that is sent by the first electronic device and that is for requesting to set the permission for the second file, and send the fifth message to the second electronic device to which the second file belongs, to request the second electronic device to set the permission for the second file, to complete cross-device related file permission management.

In a possible design, before sending the information about the fourth file to the first electronic device, the method further includes: determining the fourth file based on a file feature of the first file and a file feature of at least one file stored in the server, where a similarity between a file feature of the fourth file and the file feature of the first file meets a preset condition.

In a possible design, the file feature of the first file includes at least one of the following: a key character, a keyword, an optical character recognition OCR feature, a picture feature, a file paragraph feature, and a long text feature.

In a possible design, determining the fourth file based on the file feature of the first file and the file feature of the at least one file stored in the server includes: determining at least one to-be-determined file based on a first file feature of the first file and the file feature of the at least one file stored in the server; sending a file identifier of the at least one to-be-determined file to a second electronic device corresponding to the at least one to-be-determined file; receiving the at least one to-be-determined file sent by the second electronic device; and determining the fourth file from the at least one to-be-determined file based on a second file feature of the first file, where the fourth file is one of the at least one candidate file.

According to this design, the server may store file features of a plurality of files, and after receiving the file feature of the first file sent by the first electronic device, compare the file features of the plurality of files stored in the server with the file feature of the first file, to determine at least one to-be-determined file related to the first file. The server may obtain the at least one to-be-determined file from the second electronic device, to further compare the at least one to-be-determined file with the first file, and determine the at least one candidate file related to the first file, to ensure accuracy of similar file retrieval.

According to a third aspect, this application provides a method for deleting a related file. The method may be performed by a first electronic device. The method includes: The first electronic device deletes a first file from the first electronic device in response to a fifth operation of a user; the first electronic device determines a second file based on deleting the first file, where the second file is a file related to the first file; and the first electronic device triggers to delete the second file.

In the foregoing method, after the user deletes the first file, the first electronic device may synchronously delete the second file related to the first file, so that the user does not need to repeatedly search for and delete a related file, thereby improving user experience.

In a possible design, before triggering to delete the second file, the method further includes: displaying a third reminder message, where the third reminder message is used to query whether to synchronously delete the second file.

According to this design, before triggering to delete the second file, the first electronic device may display the third reminder message to query the user whether to delete the second file, and delete the second file after the user confirms the deletion, to meet a file management requirement of the user and improve user experience.

According to a fourth aspect, this application provides an electronic device. The electronic device includes a plurality of functional modules, and the plurality of functional modules interact with each other, to implement the method performed by the first electronic device or the second electronic device according to any one of the foregoing aspects and the implementations of the foregoing aspects. The plurality of functional modules may be implemented based on software, hardware, or a combination of software and hardware, and the plurality of functional modules may be randomly combined or divided based on a specific implementation.

According to a fifth aspect, this application provides an electronic device, including at least one processor and at least one memory. The at least one memory stores computer program instructions. When the electronic device runs, the at least one processor performs the method performed by the first electronic device or the second electronic device according to any one of the foregoing aspects and the implementations of the foregoing aspects.

According to a sixth aspect, this application provides a server. The server includes a plurality of functional modules, and the plurality of functional modules interact with each other, to implement the method performed by the server according to any one of the foregoing aspects and the implementations of the foregoing aspects. The plurality of functional modules may be implemented based on software, hardware, or a combination of software and hardware, and the plurality of functional modules may be randomly combined or divided based on a specific implementation.

According to a seventh aspect, this application provides a server, including at least one processor and at least one memory. The at least one memory stores computer program instructions, and when the server runs, the at least one processor performs the method performed by the server according to any one of the foregoing aspects and the implementations of the foregoing aspects.

According to an eighth aspect, this application provides a file management system. The file management system includes an electronic device and a server. The electronic device may be configured to perform the method performed by the first electronic device or the second electronic device according to any one of the foregoing aspects and the implementations of the foregoing aspects. The server may be configured to perform the method performed by the server according to any one of the foregoing aspects and the implementations of the foregoing aspects.

According to a ninth aspect, this application further provides a computer program product including instructions. When the computer program product runs on a computer, the computer is enabled to perform the method performed by the server or the electronic device according to any one of the foregoing aspects and the implementations of the foregoing aspects.

According to a tenth aspect, this application further provides a computer-readable storage medium, where the computer-readable storage medium stores a computer program, and when the computer program is executed by a computer, the computer is enabled to perform the method performed by the server or the electronic device according to any one of the foregoing aspects and the implementations of the foregoing aspects.

According to an eleventh aspect, this application further provides a chip. The chip is configured to read a computer program stored in a memory, to perform the method performed by a server or an electronic device according to any one of the foregoing aspects and the implementations of the foregoing aspects.

According to a twelfth aspect, this application further provides a chip system. The chip system includes a processor, configured to support a computer apparatus in implementing the method performed by a server or an electronic device according to any one of the foregoing aspects and the implementations of the foregoing aspects. In a possible design, the chip system further includes a memory, and the memory is configured to store a program and data that are necessary for the computer apparatus. The chip system may include a chip, or may include a chip and another discrete device.

### BRIEF DESCRIPTION OF DRAWINGS

FIG. 1 is a diagram of an architecture of a file management system according to an embodiment of this application;
FIG. 2 is a diagram of a structure of an electronic device according to an embodiment of this application;
FIG. 3 is a block diagram of a software structure of an electronic device according to an embodiment of this application;
FIG. 4 is a diagram of a structure of an electronic device according to an embodiment of this application;
FIG. 5 is a flowchart of a first permission management method according to an embodiment of this application;
FIG. 6 is a diagram of setting a file permission according to an embodiment of this application;
FIG. 7 is a diagram of an interface for displaying a reminder message according to an embodiment of this application;
FIG. 8 is a diagram of a display interface according to an embodiment of this application;
FIG. 9A and FIG. 9B are a flowchart of a first permission management method according to an embodiment of this application;
FIG. 10 is a diagram of a structure of a file management system according to an embodiment of this application;
FIG. 11 is a flowchart of a second permission management method according to an embodiment of this application;
FIG. 12 is a diagram of an interface for displaying a reminder message according to an embodiment of this application;
FIG. 13 is a diagram of a display interface of an electronic device according to an embodiment of this application;
FIG. 14A to FIG. 14D are a flowchart of a second permission management method according to an embodiment of this application;
FIG. 15 is a diagram of a structure of a file management system according to an embodiment of this application;
FIG. 16 is a flowchart of a third permission management method according to an embodiment of this application;
FIG. 17A to FIG. 17C are a flowchart of a third permission management method according to an embodiment of this application;
FIG. 18 is a flowchart of a method for synchronously deleting a related file according to an embodiment of this application; and
FIG. 19 is a flowchart of a first permission management method according to an embodiment of this application.

### DESCRIPTION OF EMBODIMENTS

To make objectives, technical solution, and advantages of embodiments of this application clearer, the following further describes embodiments of this application in detail with reference to the accompanying drawings. The terms "first" and "second" below in the description of embodiments of this application are merely intended for description, and shall not be understood as an indication or implication of relative importance or implicit indication of a quantity of indicated technical features. Therefore, a feature limited by "first" or "second" may explicitly or implicitly include one or more features.

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item or any combination of a plurality of items. For example, at least one of a, b, or c may indicate a, b, c, a and b, a and c, b and c, or a, b, and c, where a, b, and c may be singular or plural.

With the advent of the information era, a large quantity of files are generated in daily production and life scenarios. This poses a higher requirement on a file management capability of an electronic device. A user requires strict permission control on a file of the user, to prevent data leakage. Based on a current file management manner, the user may perform permission setting on a single file. For example, the user may set a file permission to read-only, encryption, editing restriction, or the like. However, in the current file management manner, permission setting can be performed only on the single file. For example, it is assumed that the electronic device stores a copy of the file, and the user sets a permission for the original file but does not set a permission for the copy of the file. In this case, the user cannot perform permission control on content of the file. In conclusion, a current file management solution has a problem of insufficient permission control.

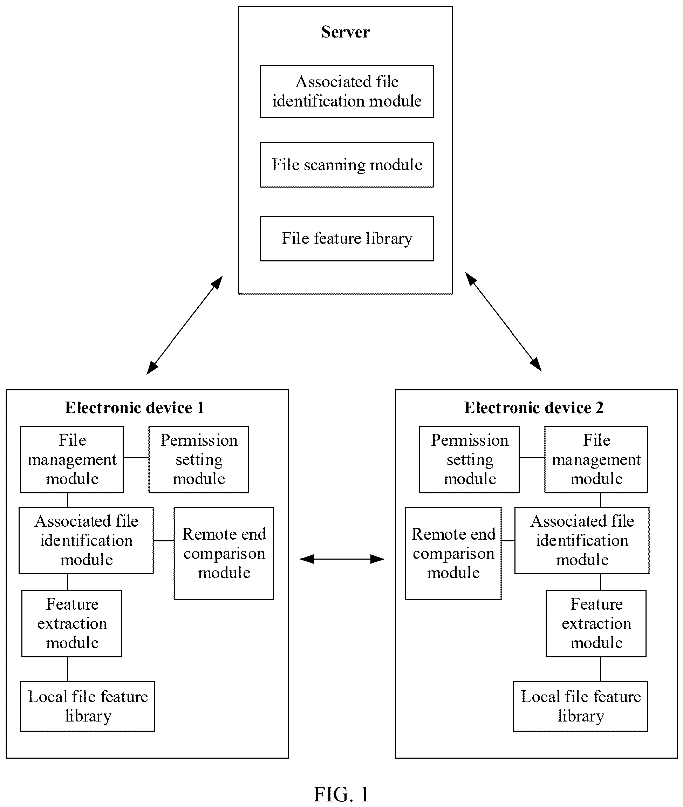

Based on the foregoing problem, an embodiment of this application provides a file management system. FIG. 1 is a diagram of an architecture of a file management system according to an embodiment of this application. As shown in FIG. 1, the file management system may include at least one electronic device. As shown in FIG. 1, an electronic device 1 and an electronic device 2 are used as an example. The file management system may further include a server.

FIG. 1 shows possible structures of the electronic device and the server according to an embodiment of this application. As shown in FIG. 1, the electronic device may include a file management module, a permission setting module, a feature extraction module, an associated file identification module, a local file feature library, and a remote comparison module. The file management module may be configured to perform operations such as creating, editing, modifying, and saving a file that are triggered by a user. The permission setting module may be configured to provide an entry for the user to set a file permission. After the user sets the file permission, the permission setting module may obtain the permission set by the user, and set the file permission based on the permission selected by the user. The feature extraction module may be configured to extract a file feature. The associated file identification module may be configured to search for a file associated with the file based on the file feature. The local file feature library is used to store a file feature of a local file. The remote comparison module is configured to extract a file feature of the file sent by a remote device, and identify, based on the file feature, whether the file sent by the remote device and the local file are associated files.

As shown in FIG. 1, the server may include a file feature library, an associated file identification module, and a file scanning module. The file feature library is configured to store a file feature. Optionally, the file feature may be uploaded by the electronic device to the server, or the server may further include a feature extraction module. The feature extraction module may be configured to perform feature extraction based on a file uploaded by the electronic device, to obtain a file feature of the file. The associated file identification module may be configured to search for a file associated with the file based on the file feature. The file scanning module may be configured to search for a file based on a file identifier.

It should be noted that a structure of each device in the file management system shown in FIG. 1 is merely used as an example rather than a limitation. A scenario to which the permission management method provided in this embodiment of this application is applicable may include more or fewer devices than those of the file management system shown in FIG. 1. For example, the permission management method provided in this embodiment of this application may be performed by an electronic device, or may be performed by an electronic device interactively with an electronic device, or may be performed by at least one electronic device interactively with a server. This is not limited in embodiments of this application. For a specific implementation, refer to the following embodiments. Details are not described herein. In addition, it may be understood that, in different scenarios, the electronic device or the server may alternatively have more or fewer modules than those in the structure shown in FIG. 1, or in a specific implementation, module division may be performed in another division manner. This is not limited in embodiments of this application.

The following describes the electronic device, and embodiments for using such an electronic device. The electronic device in embodiments of this application may be a tablet computer, a mobile phone, a vehicle-mounted device, an augmented reality (augmented reality, AR)/virtual reality (virtual reality, VR) device, a notebook computer, or an ultra-mobile personal computer (ultra-mobile personal computer, UMPC), a netbook, a personal digital assistant (personal digital assistant, PDA), a wearable device, or the like. A specific type of the electronic device is not limited in embodiments of this application.

In some embodiments of this application, the electronic device may alternatively be a portable terminal device that further includes another function, for example, a personal digital assistant function and/or a music player function. An example embodiment of the portable terminal device includes but is not limited to a portable terminal device using iOS^{®}, Android^{®}, Microsoft^{®}, Harmony^{®}, or another operating system.

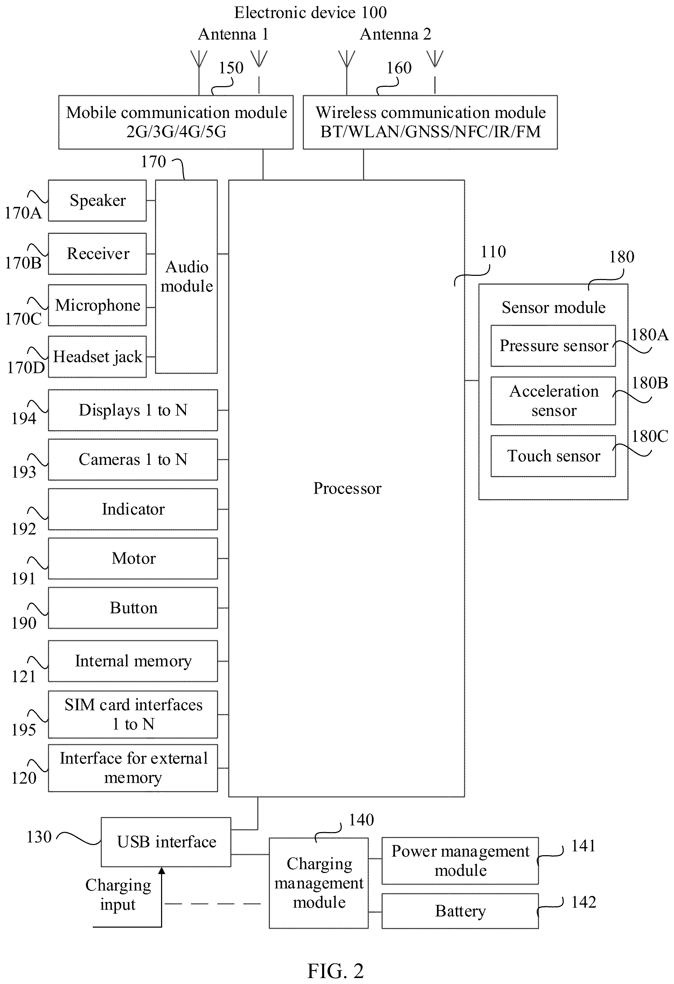

FIG. 2 is a diagram of a structure of an electronic device 100 according to an embodiment of this application. As shown in FIG. 2, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors. The controller may be a nerve center and a command center of the electronic device 100. The controller may generate an operation control signal based on an instruction operation code and a time sequence signal, to complete control of instruction reading and instruction execution. A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, micro USB interface, a USB type-C interface, or the like. The USB interface 130 may be configured to connect to a charger to charge the electronic device 100, or may be configured to transmit data between the electronic device 100 and a peripheral device. The charging management module 140 is configured to receive a charging input from a charger. The power management module 141 is configured to connect to the battery 142, the charging management module 140, and the processor 110. The power management module 141 receives an input of the battery 142 and/or an input of the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antennas may be used in conjunction with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices that integrate at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite systems, QZSS), and/or a satellite based augmentation system (satellite based augmentation system, SBAS).

The display 194 is configured to display a display interface of an application, for example, display a display page of an application installed on the electronic device 100. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, software code of at least one application, and the like. The data storage area may store data (for example, a captured image or a recorded video) and the like generated when the electronic device 100 is used. In addition, the internal memory 121 may include a high-speed random access memory, or may include a non-volatile memory, for example, at least one magnetic disk storage device, a flash storage device, or a universal flash storage (universal flash storage, UFS).

The interface 120 for external memory may be configured to connect to an external storage card, for example, a micro SD card, to extend a storage capability of the electronic device. The external memory card communicates with the processor 110 through the interface 120 for external memory, to implement a data storage function. For example, files such as pictures or videos are stored in the external memory card.

The electronic device 100 may implement an audio function, for example, music playing and recording, through the audio module 170, the speaker 170A, the receiver 170B, the microphone 170C, the headset jack 170D, the application processor, and the like.

The sensor module 180 may include a pressure sensor 180A, an acceleration sensor 180B, a touch sensor 180C, and the like.

The pressure sensor 180A is configured to sense a pressure signal, and can convert the pressure signal into an electrical signal. In some embodiments, the pressure sensor 180A may be disposed on the display 194.

The touch sensor 180C is also referred to as a "touch panel". The touch sensor 180C may be disposed on the display 194, and the touch sensor 180C and the display 194 constitute a touchscreen, which is also referred to as a "touch screen". The touch sensor 180C is configured to detect a touch operation performed on or near the touch sensor. The touch sensor may transfer the detected touch operation to the application processor, to determine a type of the touch event. A visual output related to the touch operation may be provided through the display 194. In some other embodiments, the touch sensor 180C may also be disposed on a surface of the electronic device 100 at a location different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100. The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effect. Touch vibration feedback effect may be further customized. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to come into contact with and be separated from the electronic device 100.

It may be understood that the components shown in FIG. 2 do not constitute a specific limitation on the electronic device 100. The electronic device may further include more or fewer components than those shown in the figure, or a combination of a part of the components, or splits from a part of the components, or an arrangement of different components. In addition, a combination/connection relationship between the components in FIG. 2 may also be adjusted and modified.

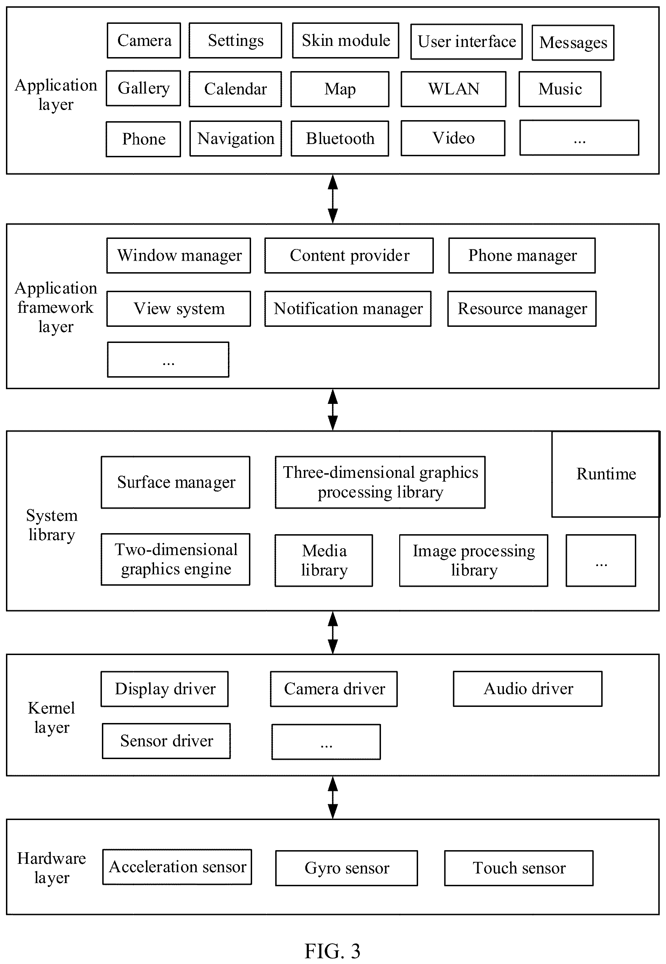

FIG. 3 is a block diagram of a software structure of an electronic device according to an embodiment of this application. As shown in FIG. 3, the software structure of the electronic device may be a layered architecture. For example, software may be divided into several layers, and each layer has a clear role and task. The layers communicate with each other through a software interface. In some embodiments, an operating system is divided into four layers: an application layer, an application framework (framework, FWK) layer, a runtime (runtime) and system library, and a kernel layer from top to bottom.

The application layer may include a series of application packages (application packages). As shown in FIG. 3, the application layer may include Camera, Settings, a skin module, a user interface (user interface, UI), a third-party application, and the like. The third-party application may include Gallery, Calendar, Phone, Map, Navigation, WLAN, Bluetooth, Music, Video, Messages, and the like. In this embodiment of this application, the application layer may include the target installation package that is of the target application and that the electronic device requests to download from the server, and the function file and the layout file in the target installation package are adapted to the electronic device.

The application framework layer provides an application programming interface (application programming interface, API) and a programming framework for an application at the application layer. The application framework layer may include some predefined functions. As shown in FIG. 3, the application framework layer may include a window manager, a content provider, a view system, a phone manager, a resource manager, a notification manager, and the like. The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert tone is made, the electronic device vibrates, or the indicator light blinks.

The file manager is configured to manage a file stored in the electronic device. For example, the file manager may perform permission management on the file. During implementation, permission management may be performed, based on the permission management method provided in embodiments of this application and based on a file permission set by the user, on the file stored in the electronic device and an associated file of the file. Optionally, the file manager in embodiments of this application may include a plurality of modules in the electronic device in the file management system shown in FIG. 1, and implement functions corresponding to the plurality of modules.

A runtime includes a core library and a virtual machine. The runtime schedules and manages an operating system.

The kernel library includes two parts: a function that needs to be invoked in Java language, and a kernel library of the operating system. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), a two-dimensional graphics engine (for example, SGL), and an image processing library.

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The hardware layer may include various sensors, such as an acceleration sensor, a gyro sensor, and a touch sensor.

It should be noted that the structures shown in FIG. 2 and FIG. 3 are merely examples of the electronic device provided in embodiments of this application, and cannot impose any limitation on the electronic device provided in embodiments of this application. In specific implementation, the electronic device may have more or fewer components or modules than those in the structures shown in FIG. 2 or FIG. 3.

The following describes, with reference to the accompanying drawings, implementations of the permission management method provided in embodiments of this application in different application scenarios. Unless otherwise specified, steps represented by dashed lines in the accompanying drawings corresponding to embodiments of this application are all optional steps.

### Embodiment 1

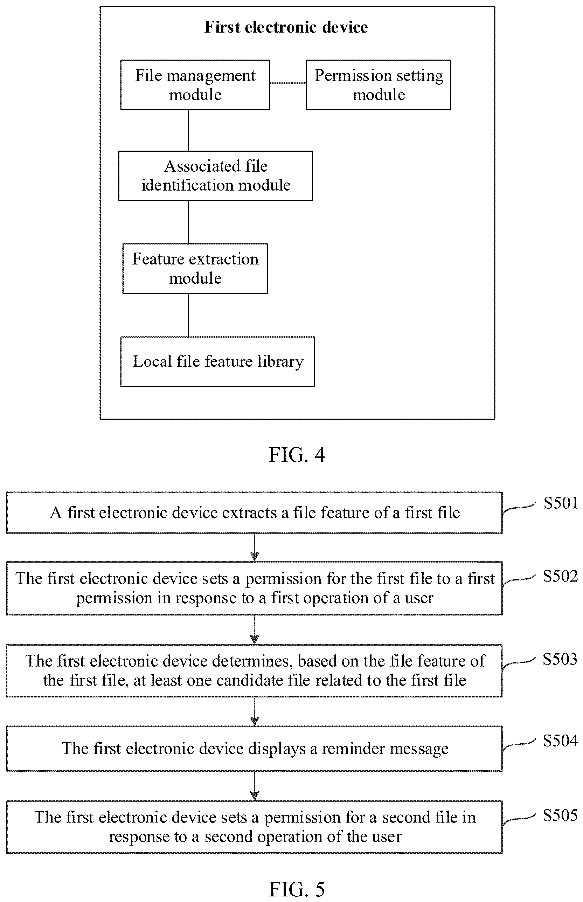

Optionally, when an electronic device performs a permission management method provided in embodiments of this application, an architecture of the electronic device may be shown in FIG. 4. As shown in FIG. 4, the electronic device may include a file management module, a permission setting module, a feature extraction module, an associated file identification module, and a local file feature library. For functions of the modules, refer to related descriptions in FIG. 1. Repeated details are not described again.

FIG. 5 is a flowchart of a first permission management method according to an embodiment of this application. The method may be performed by a first electronic device. For example, the method may be performed by any electronic device in the file management system shown in FIG. 1. As shown in FIG. 5, the method may include the following steps.

S501: The first electronic device extracts a file feature of a first file.

Optionally, the first electronic device may extract the file feature of the first file in response to an operation of a user. For example, the operation of the user may be an operation that is triggered by the user and that is of saving and closing the first file. For example, after the user creates the first file or edits the first file, content of the first file changes, and the user may tap a save control to save modified file content. After the user taps a close control, the first electronic device may extract the file feature of the first file.

Optionally, a file in embodiments of this application may include a document, a picture, a video, an audio, an executable file, a script, a compressed package, and the like. A type of the file is not limited in embodiments of this application.

In an optional implementation, the file feature may include at least one of the following: a key character, a keyword, an optical character recognition (optical character recognition, OCR) feature, a picture feature, a file paragraph feature, a long text feature, and the like. The key character and the keyword may be separately a character or a word obtained from a file name or file content. The OCR feature may be a feature obtained after OCR detection is performed on a file. The picture feature may be a feature obtained by performing feature extraction on a picture in the file. For example, the picture may be a micro-mark (logotype, logo) picture. The file paragraph feature may be a feature extracted by analyzing a file paragraph. For example, the file paragraph feature may include a quantity of paragraphs included in the file, a quantity of words in each paragraph, and the like. The long text feature may include, for example, a file length feature and a context feature. It should be noted that, in this embodiment of this application, content included in the file feature is merely used as an example rather than a limitation. In specific implementation, the file feature may further include another feature.

In this embodiment of this application, after obtaining the file feature of the first file, the first electronic device may store the file feature of the first file and a file identifier of the first file. The file identifier of the first file may be, for example, a uniform resource identifier (uniform resource identifier, URI) of the first file or a storage path of the first file. Optionally, the electronic device may store the file feature and the file identifier of the first file in the local file feature library shown in FIG. 4.

S502: The first electronic device sets a permission for the first file to a first permission in response to a first operation of the user.

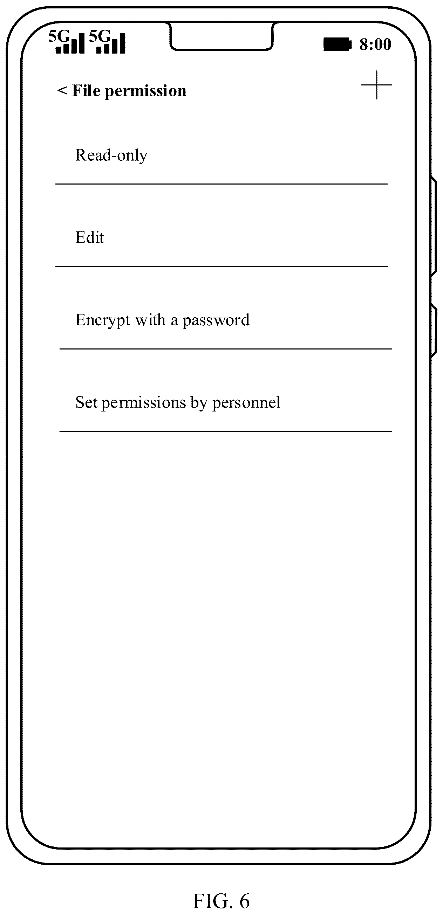

Optionally, the first operation may be an operation that the user selects the permission for the first file as the first permission. For example, FIG. 6 is a diagram of setting a file permission according to an embodiment of this application. As shown in FIG. 6, the first electronic device may display a file permission setting interface. The file permission setting interface includes optional file permissions such as "Read-only", "Edit", "Encrypt with a password", and "Set permissions by personnel" in FIG. 6. The user may select the first permission in the file permission setting interface, and the electronic device sets the permission for the first file to the first permission. For example, when the first permission selected by the user is "Read-only", after the first file is opened on the first electronic device, the user can only view the first file but cannot edit the first file.

After setting the permission for the first file to the first permission, the first electronic device may store an access control strategy corresponding to the first file. The access control strategy corresponding to the first file may include but is not limited to at least one of the following: a user account identifier, expiration time of the first file, the first permission, and an account identifier of an authorized user. Optionally, after encrypting the access control strategy corresponding to the first file, the first electronic device may store the encrypted access control strategy, to further improve security of permission setting.

It should be noted that, during implementation, the first electronic device may alternatively extract the file feature of the first file after setting the permission for the first file to the first permission. A sequence of setting the file permission and extracting the file feature is not limited in embodiments of this application.

S503: The first electronic device determines, based on the file feature of the first file, at least one candidate file related to the first file.

In this embodiment of this application, the first electronic device may determine, based on the file feature of the first file, the candidate file related to the first file from at least one file stored in the first electronic device. There may be one or more candidate files.

In an optional implementation, the first electronic device may separately compare, according to a file comparison method, the first file with the at least one file stored in the first electronic device, and determine the at least one candidate file from the at least one file stored in the first electronic device. During implementation, the first electronic device may compare the file feature of the first file with the file feature of the file stored in the first electronic device, to determine a similarity between the file feature of the first file and the file feature of the file stored in the first electronic device, and use a file whose similarity meets a preset condition as a candidate file. For example, the first electronic device may use a file whose similarity is greater than or equal to a preset threshold as a candidate file.

Optionally, the first electronic device may further perform two-step file feature comparison, to improve accuracy of the determined candidate file. During implementation, the first electronic device may determine, based on a first file feature of the first file, at least one to-be-determined file from the file stored in the first electronic device. The first file feature may include but is not limited to a key character, a keyword, an OCR feature, and a picture feature. For example, the first electronic device may compare the first file feature of the first file with the file feature of the file stored in the first electronic device, to determine a first similarity, and use a file whose first similarity is greater than or equal to a first preset threshold as the to-be-determined file. The first electronic device may further determine the at least one candidate file from the at least one to-be-determined file based on a second file feature of the first file. The second file feature may include but is not limited to a picture, a file paragraph feature, and a long text feature. For example, the first electronic device may perform at least one of the following file comparison manners to determine the at least one candidate file from the at least one to-be-determined file:

Manner 1: The first electronic device may determine a second similarity between a picture in the first file and a picture in the to-be-determined file, and use a file whose second similarity is greater than or equal to a second preset threshold as a candidate file.

Manner 2: The first electronic device may determine a file paragraph feature of the first file, determine a file paragraph feature of the to-be-determined file, and determine a matching degree between the file paragraph feature of the first file and the file paragraph feature of the to-be-determined file, and the first electronic device may use a file whose matching degree is greater than a third preset threshold as a second file.

Manner 3: The first electronic device may determine, based on a picture, an OCR and a long text similarity detection manner, a file whose similarity to the first file is greater than a fourth preset threshold, and use the determined file as a candidate file.

It should be noted that the foregoing file comparison manner is merely used as an example rather than a limitation provided in this embodiment of this application. In specific implementation, the file comparison manners may be selected for use individually or in combination, or the candidate file related to the first file may be determined based on another file comparison manner. This is not limited in embodiments of this application.

In addition, it should be noted that the first file feature may be a file feature that is easily obtained compared with the second file feature. In this embodiment of this application, a second step of file feature comparison is an optional step. During implementation, the first electronic device may use the at least one to-be-determined file determined in a first step of file feature comparison as the at least one candidate file. In this case, the first electronic device may not extract the second file feature when extracting the file feature, to save computing power and storage space of the first electronic device.

It may be understood that the candidate file determined in the foregoing manner from the file stored in the first electronic device is a file related to the first file. For example, the candidate file may be a copy file of the first file.

Optionally, before performing S503, the first electronic device may further display a query message, where the query message is used to query the user whether to search for the second file related to the first file. After the user taps OK, the first electronic device may perform S503, to search for the second file when the user needs to set a permission for a similar file. This prevents a waste of computing power of the electronic device when the user does not set a permission requirement.

S504: The first electronic device displays a reminder message.

In an optional implementation, after determining the at least one candidate file related to the first file, the first electronic device may display the reminder message in the first electronic device, where the reminder message is used to query the user whether to synchronously set a permission for the at least one candidate file, and the reminder message may include information about the candidate file, for example, the reminder message may include a file name of the candidate file, and the user may select a candidate file whose permission needs to be synchronously set.

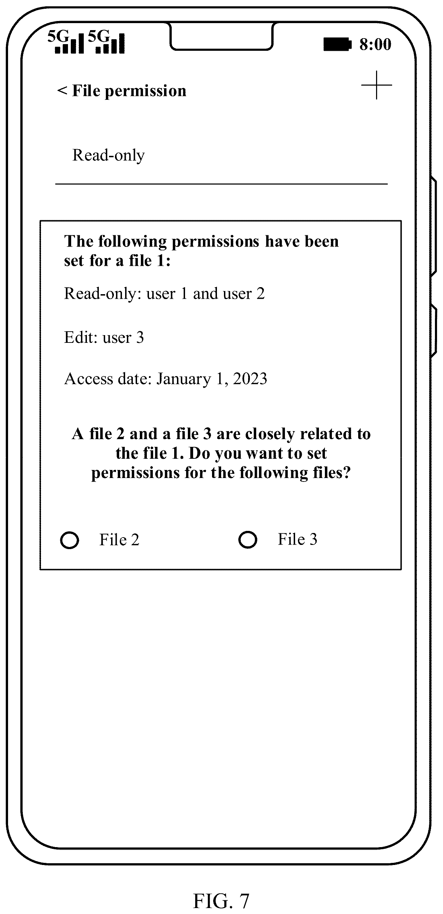

For example, FIG. 7 is a diagram of an interface for displaying a reminder message according to an embodiment of this application. As shown in FIG. 7, the first electronic device may display, in the reminder message, related information of the first file for which permission setting is complete. As shown in FIG. 7, the first file is a file 1, and the first electronic device displays a case in which a "Read-only" permission for the first file corresponds to a user 1 and a user 2, an "Edit" permission for the first file corresponds to a user 3, and access date is January 1, 2023. The first electronic device may further display a name of a found candidate file in the reminder message. As shown in FIG. 7, candidate files are a file 2 and a file 3. The user may select the file 2 and/or the file 3, to synchronously set permissions for the candidate files selected by the user.

S505: The first electronic device sets a permission for the second file in response to a second operation of the user.

Optionally, the second operation is an operation of selecting the second file from the at least one candidate file by the user, and the second file is a part or all of the at least one candidate file.

In an optional implementation, after the user triggers the second operation to select the second file, the first electronic device may set the permission for the second file to the first permission. After the setting is completed, the permission for the second file is the same as the permission for the first file, so that the permission for the related file can be quickly set without repeated operations of the user, thereby further enhancing file permission control to ensure user information security.

In another optional implementation, the first electronic device may set the permission for the second file to a second permission, where the second permission may be a permission configured by a system, or the second permission may be a permission set by the user. For example, the second permission may be a permission that is related to the first permission and that is configured by the system. For example, the second permission may be a subset of the first permission.

In other words, in the permission management method provided in this embodiment of this application, after the user selects the second file from the at least one candidate file, the first electronic device may directly set the permission for the second file to the first permission or the permission configured by the system, or may trigger the message for reminding the user to set the permission for the second file, and the user sets the permission for the second file, to flexibly implement permission management for a related file.

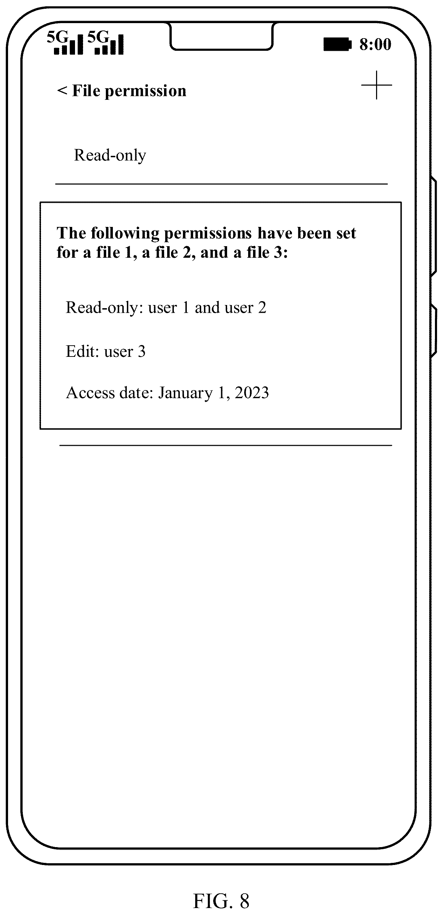

Optionally, after completing the permission setting for the second file, the first electronic device may display a notification message, where the notification message is used to notify the user that the permission setting for the second file is completed. FIG. 8 is a diagram of a display interface according to an embodiment of this application. As shown in FIG. 8, after a user selects the file 2 and the file 3 in the interface shown in FIG. 7, the first electronic device may set permissions for the file 2 and the file 3 to the first permission, and the first electronic device may display a notification message indicating that permission setting for the file 1, the file 2, and the file 3 is completed.

In some embodiments, after the first electronic device completes the permission setting for the second file, when the user modifies the permission for the first file again, the first electronic device may trigger to modify the permission for the second file. For example, if the user modifies the permission for the first file to a third permission, the first electronic device may synchronously modify the permission for the second file to the third permission, or the first electronic device may modify the permission for the second file to a fourth permission, where the fourth permission is a permission configured by the system or a permission set by the user. Similarly, when the user modifies the permission for the second file, the first electronic device may trigger to modify the permission for the first file. Repeated details are not described again.

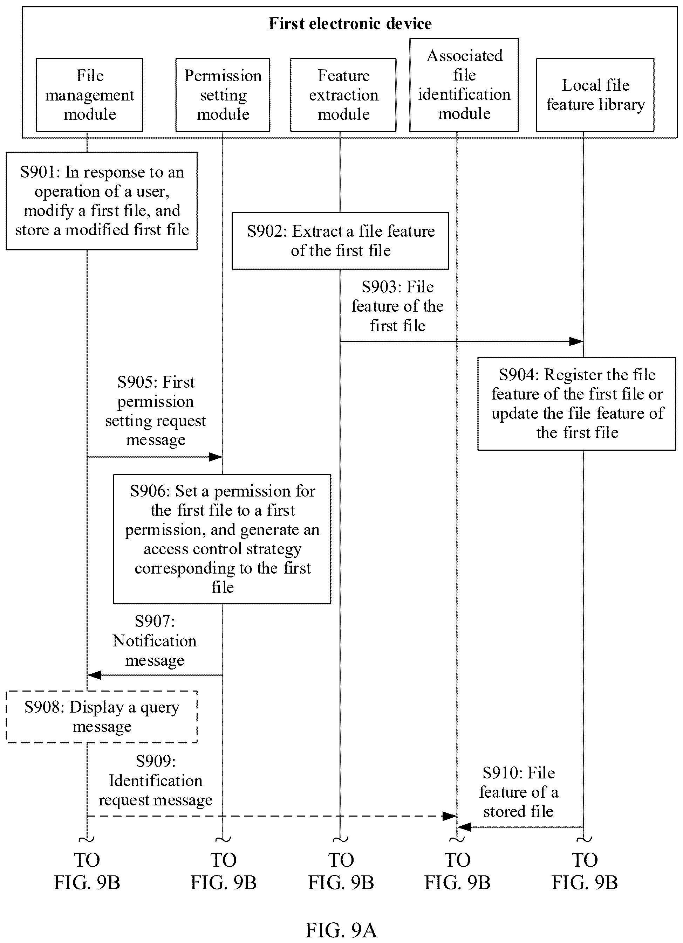

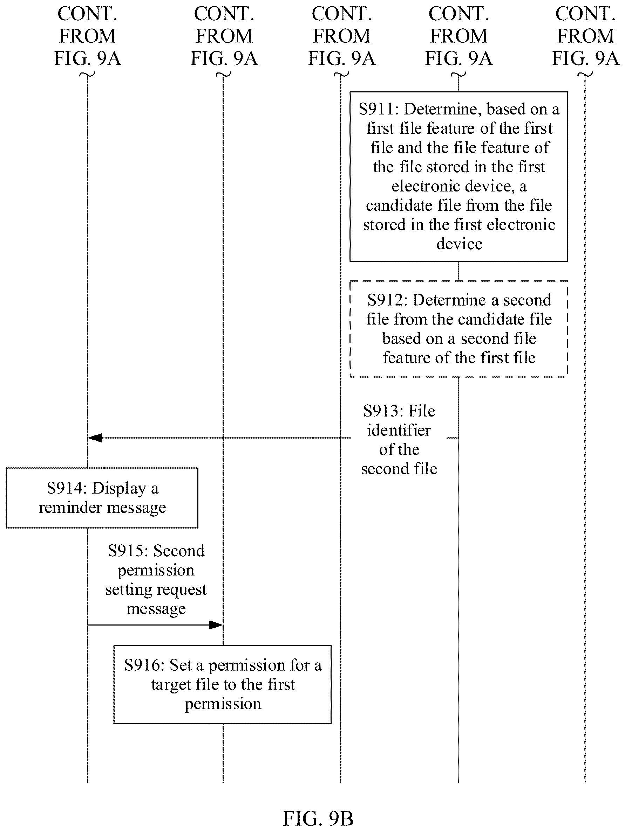

The first permission management method provided in this embodiment of this application may be performed by modules in the first electronic device. When the modules in the first electronic device shown in FIG. 4 perform the first permission management method provided in this embodiment of this application, FIG. 9A and FIG. 9B are a flowchart of a first permission management method according to an embodiment of this application. As shown in FIG. 9A and FIG. 9B, the method includes the following steps.

S901: In response to an operation of a user, a file management module modifies a first file, and stores a modified first file.

In this embodiment, the operation of the user may be an operation of modifying and saving the first file by the user.

S902: A feature extraction module extracts a file feature of the first file.

Optionally, the file feature of the first file may include but is not limited to at least one of the following: a key character, a keyword, an OCR feature, a picture feature, a file paragraph feature, and a long text feature.

S903: The feature extraction module sends the file feature of the first file to a local file feature library.

S904: The local file feature library registers the file feature of the first file or updates the file feature of the first file.

Optionally, when the local file feature library does not store the file feature of the first file, but receives the file feature of the first file, the local file feature library may register the file feature of the first file, to store the file feature of the first file and a file identifier of the first file. When the file feature of the first file is stored in the local file feature library, after receiving the file feature of the first file, the local file feature library may update the file feature of the first file in the local file feature library.

S905: The file management module sends a first permission setting request message to a permission setting module in response to the first operation of the user.

Optionally, the first operation may be an operation of selecting a permission for the first file as a first permission by the user, and the first permission setting request message may be used to request the permission setting module to set the permission for the first file to the first permission.

S906: The permission setting module sets the permission for the first file to the first permission, and generates an access control strategy corresponding to the first file.

S907: The permission setting module sends a notification message to the file management module.

The notification message indicates that the permission setting for the first file is completed, and the notification message may include the access control strategy corresponding to the first file.

S908: The file management module displays a query message.

Optionally, the query message is used to query the user whether to search for a file related to the first file.

S909: In response to the operation of the user, the file management module sends an identification request message to an associated file identification module.

Optionally, the identification request message is used to request the associated file identification module to determine the file related to the first file.

It should be noted that S908 and S909 are optional steps. During implementation, the first electronic device may not query the user whether to search for the file related to the first file, and automatically perform S910.

S910: The associated file identification module obtains, from the local file feature library, a file feature of a file stored in the first electronic device.

S911: The associated file identification module determines, based on a first file feature of the first file and the file feature of the file stored in the first electronic device, at least one to-be-determined file from the file stored in the first electronic device.

S912: The associated file identification module determines at least one candidate file from the at least one to-be-determined file based on a second file feature of the first file.

For specific implementations of S911 and S912, refer to S503. Repeated details are not described again.

It should be noted that S912 is an optional step. In other words, S912 may not be performed during implementation, and the associated file identification module may use the to-be-determined file determined in S911 as a candidate file.

S913: The associated file identification module sends a file identifier of the at least one candidate file to the file management module.

S914: The file management module displays a reminder message.

The reminder message is used to query the user whether to synchronously set a permission for the candidate file.

S915: The file management module sends a second permission setting request message to the permission setting module in response to a second operation of the user.

The second operation is an operation of selecting a second file from the at least one candidate file by the user, the second permission setting request message is used to request to set a permission for the second file, and the second permission setting request message may include a file identifier of the second file. For example, the second permission setting request message may be used to request to set the permission for the second file to the first permission.

S916: The permission setting module sets the permission for the second file.

For example, when the permission for the second file is set to the first permission, the permission setting module may obtain the access control strategy corresponding to the first file, and generate and store an access control strategy corresponding to the second file based on the access control strategy corresponding to the first file.

The following describes an implementation in which the permission management method provided in embodiments of this application is applied to a plurality of electronic devices. Embodiment 2 may be applied to a file management system including a server and a plurality of electronic devices. In Embodiment 2, the server may be used to search for associated files on different electronic devices of a same user account. Embodiment 3 may be applied to a file management system including a plurality of electronic devices. In Embodiment 3, interaction may be performed through a connection established between electronic devices, to search for associated files on different electronic devices of a same user account.

### Embodiment 2

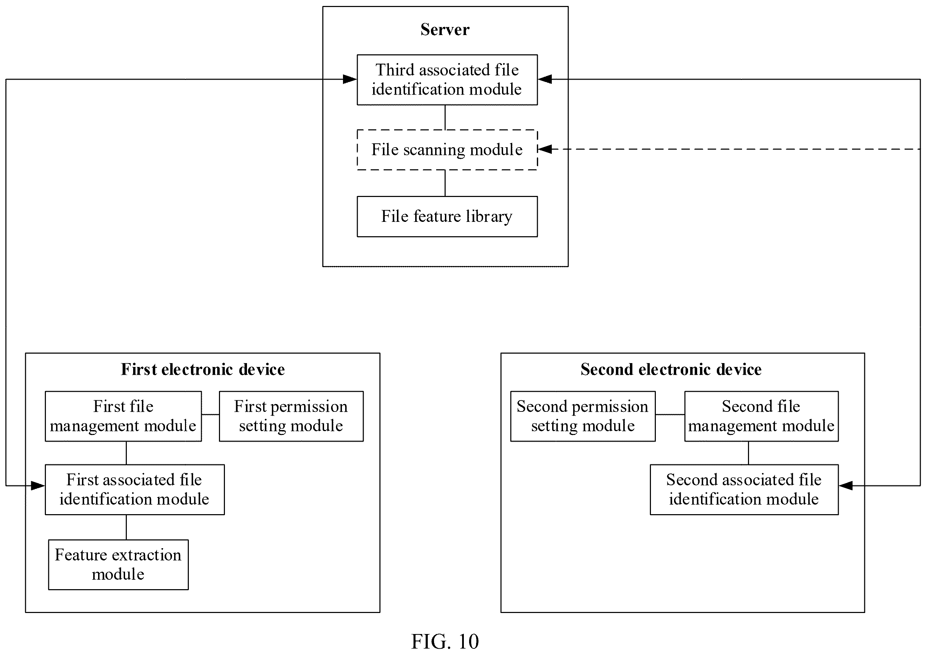

Optionally, when a first electronic device, a second electronic device, and a server perform a permission management method provided in embodiments of this application, an architecture of each device may be shown in FIG. 10. As shown in FIG. 10, the first electronic device may include a first file management module, a first permission setting module, a feature extraction module, and a first associated file identification module, the second electronic device may include a second file management module, a second permission setting module, and a second associated file identification module, and the server may include a file feature library, a third associated file identification module, and a file scanning module. For functions of the modules, refer to the related descriptions in FIG. 1. Repeated details are not described again.

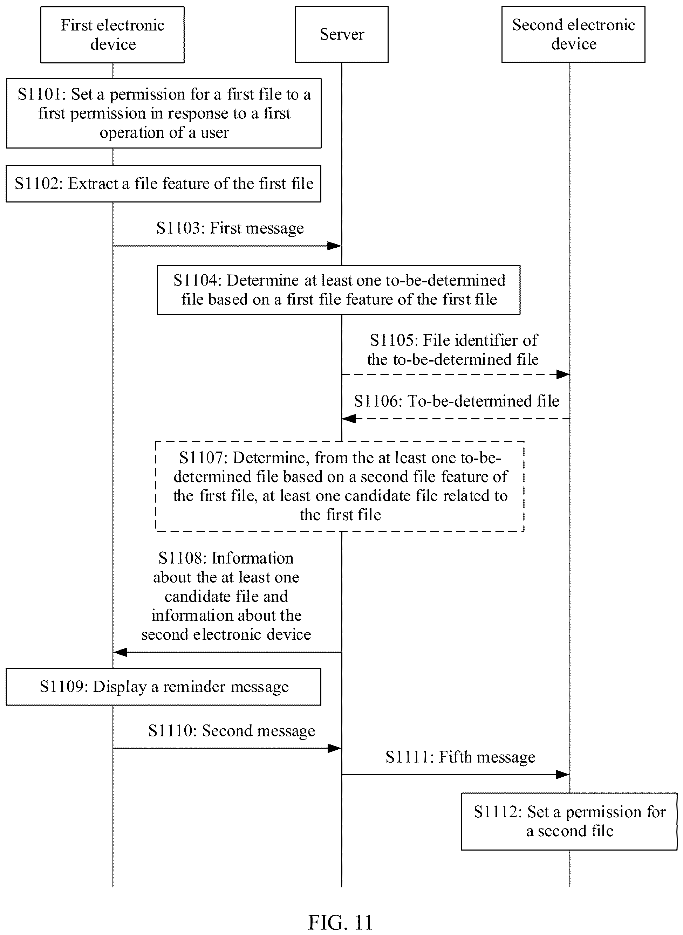

FIG. 11 is a flowchart of a second permission management method according to an embodiment of this application. The method may be performed by a first electronic device, a second electronic device, and a server. For example, the method may be performed by the electronic device and the server in the file management system shown in FIG. 1. As shown in FIG. 11, the method may include the following steps.

S1101: The first electronic device sets a permission for a first file to a first permission in response to a first operation of a user.

Optionally, the first operation may be an operation that the user selects the permission for the first file as the first permission.

S1102: The first electronic device extracts a file feature of the first file.

Optionally, the file feature of the first file may include but is not limited to at least one of the following: a key character, a keyword, an OCR feature, a picture feature, a file paragraph feature, and a long text feature.

S1103: The first electronic device sends a first message to the server.

Optionally, the first message may be used to request to determine a file related to the first file. The first request message may include the file feature of the first file.

In this embodiment of this application, the server may store file features of files uploaded by different electronic devices under a same user account. For example, a first user account is logged in to the first electronic device and the second electronic device. When the first electronic device and the second electronic device each upload a file and a file feature of the file to the server, the server may store the file feature of the file uploaded by each of the first electronic device and the second electronic device in a file feature library of the server. For example, after the first electronic device sends the file feature of the first file to the server, the server may store a device identifier of the first electronic device, an account identifier of a first user account, a file identifier of the first file, and the file feature of the first file. Optionally, the first electronic device may alternatively upload the first file to the server, and the server extracts the file feature of the first file.

S1104: The server determines at least one to-be-determined file based on a first file feature of the first file.

In an optional implementation, the server may compare the first file feature of the first file with a file feature in a first file feature library stored in the server, to determine a first similarity between the first file feature and the file feature in the first file feature library. The first file feature library includes a file feature uploaded by an electronic device corresponding to a first account, and the first account is a logged-in user account on the first electronic device. The server may use, as a to-be-determined file, a file whose first similarity between the file feature in the first file feature library and the first file feature of the first file meets a preset condition. For example, the server may use, as the to-be-determined file, a file whose first similarity is greater than or equal to a first preset threshold.

It may be understood that, if the first file feature library stored in the server includes the file feature uploaded by the electronic device corresponding to the first account, a candidate file determined by the server may be a file stored in the first electronic device or a file stored in another electronic device to which the first account is logged in.

S1105: The server sends a file identifier of the to-be-determined file to the second electronic device.

Optionally, after determining the at least one to-be-determined file, the server may determine the second electronic device based on a device identifier corresponding to the at least one to-be-determined file. The second electronic device stores the to-be-determined file, and the server may send a file identifier of the at least one to-be-determined file to the second electronic device.

S1106: The second electronic device uploads the to-be-determined file to the server.

In this embodiment of this application, after receiving the file identifier that is of the to-be-determined file and that is sent by the server, the second electronic device may search a file system of the second electronic device for the to-be-determined file based on the file identifier of the to-be-determined file, and upload the to-be-determined file to the server.

In some embodiments, when the server has stored the to-be-determined file, S1105 and S1106 are optional steps. The server may search the files stored in the server for the to-be-determined file based on the file identifier of the to-be-determined file, and then perform S1107. This is not limited in embodiments of this application.

S1107: The server determines, from the at least one to-be-determined file based on a second file feature of the first file, at least one candidate file related to the first file.

Optionally, the server may obtain a file feature of the to-be-determined file, and determine the at least one candidate file from the at least one to-be-determined file based on the second file feature of the first file and the file feature of the to-be-determined file. For example, the server may determine the at least one candidate file based on at least one of a picture similarity, a file paragraph matching degree, picture OCR, and a long text similarity. For the foregoing file comparison manner, refer to the description of S503. Repeated details are not described again.

In some embodiments, S1105 to S1107 are optional steps. Alternatively, the server may directly use the at least one to-be-determined file as the at least one candidate file, and does not need to perform file comparison between the at least one to-be-determined file and the first file.

S1108: The server sends information about the at least one candidate file and information about the second electronic device to the first electronic device.

The information about the candidate file may include at least one of the following: a file identifier of the candidate file, a file digest of the candidate file, and data of the candidate file. The information about the second electronic device may include, for example, at least one of information such as a device identifier, a device name, and a device model of the second electronic device.

S1109: The first electronic device displays a reminder message.

Optionally, the reminder message is used to query the user whether to synchronously set a permission for the candidate file. For example, the reminder message may include the information about the candidate file and the information about the second electronic device, and the user may select a file whose permission needs to be synchronously set.

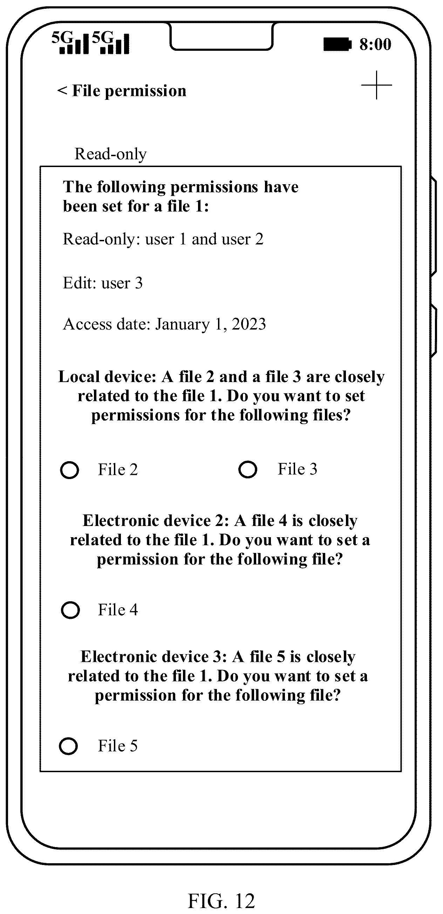

For example, FIG. 12 is a diagram of an interface for displaying a reminder message according to an embodiment of this application. As shown in FIG. 12, the first electronic device may display, in the reminder message, related information of the first file for which permission setting is complete. As shown in FIG. 12, the first file is a file 1, the first electronic device is an electronic device 1, and the first electronic device displays a case in which a "Read-only" permission for the first file corresponds to a user 1 and a user 2, an "Edit" permission for the first file corresponds to a user 3, and access date is January 1, 2023. The first electronic device may further display, in the reminder message, a file name of the candidate file and an identifier of an electronic device to which the candidate file belongs. As shown in FIG. 12, the candidate file includes a file 2, a file 3, a file 4, and a file 5. The file 2 and the file 3 are located on the electronic device 1, the file 4 is located on an electronic device 2, and the file 3 is located on an electronic device 3. The user may select at least one of the file 2, the file 3, the file 4, or the file 5, to trigger the electronic device to synchronously set a permission for a second file selected by the user.

S1110: The first electronic device sends a second message to the server in response to a second operation of the user.

Optionally, the second operation is an operation of selecting the second file from the at least one candidate file by the user, and the second file is a part or all of the candidate file. The second message may be used to request to set the permission for the second file, and the second request may include a file identifier of the second file.

S1111: The server sends a fifth message to the second electronic device corresponding to the second file.

Optionally, the fifth message is used to request the second electronic device to set the permission for the second file.

In an optional implementation, the fifth message may be used to request the second electronic device to set the permission for the second file to the first permission. Optionally, the first electronic device may send an access control strategy corresponding to the first file to the server. When the server sends the fifth message to the second electronic device, the fifth message may include the access control strategy corresponding to the first file, or the fifth message may include an identifier corresponding to the first permission.

S1112: The second electronic device sets the permission for the second file.

Optionally, the second electronic device may set the permission for the second file to the first permission, or the second electronic device may set the permission for the second file to a second permission. The second permission may be a permission set by the user or a permission configured by the system. For example, the second permission may be a permission that is related to the first permission and that is configured by the system, for example, the second permission may be a subset of the first permission.

The second electronic device may set the permission for the second file, and store an access control strategy corresponding to the second file. For example, the second electronic device sets the permission for the second file to the first permission. If the sixth message received by the second electronic device includes the access control strategy corresponding to the first file, the second electronic device may generate and store, based on the access control strategy corresponding to the first file, the access control strategy corresponding to the second file; or the second electronic device may store a preset access control strategy. When the request message received by the second electronic device includes the identifier corresponding to the first permission, the second electronic device may search, based on the identifier of the first permission, the preset access control strategy for the access control strategy corresponding to the first permission, and uses the found access control strategy corresponding to the first permission as the access control strategy corresponding to the second file.

In some embodiments, when the first permission is encrypting the file by using a password, the first electronic device may encrypt the password that is set by the user and that is used to encrypt the first file, and send the encrypted password to the second electronic device. After the second electronic device decodes the password to obtain the password, the second file may be encrypted based on the password, and the user does not need to enter the password again; or the second electronic device may display a reminder message, where the reminder message is used to remind the user to enter the password used to encrypt the second file.

It should be noted that the permission management method provided in Embodiment 2 of this application may be combined with the permission management method provided in Embodiment 1. In other words, when the second file selected by the user from the candidate files includes a file stored in the first electronic device, the first electronic device sets a permission for the file, when the second file includes the file stored in the second electronic device, the first electronic device sends the file identifier of the second file to the server, and the server indicates the second electronic device to set the permission for the second file. For specific implementation, refer to Embodiment 1 and Embodiment 2. Repeated details are not described again.

Optionally, after setting the permission for the second file, the second electronic device may send a notification message to the server, to notify the server that the permission setting is completed. The server may send the notification message to the first electronic device, and the first electronic device may display the reminder message. The reminder message is used to notify the user that the permission setting for the second file is completed.

In some scenarios, after accessing a network, the electronic device may interact with the server. After the server sends a message to the second electronic device corresponding to the second file, if the second electronic device does not access the network, and the second electronic device cannot receive the message, the second electronic device does not respond. When the server does not receive, within preset duration, a notification message sent by the second electronic device, the server may send the message to the second electronic device again, or the server may send the message to the second electronic device after determining that the second electronic device is online.

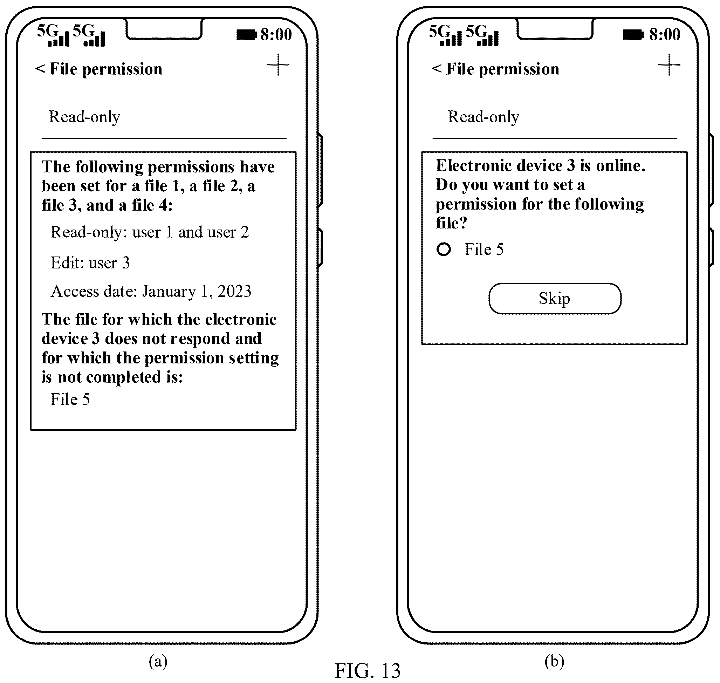

For example, FIG. 13 is a diagram of a display interface of an electronic device according to this embodiment of this application. In (a) in FIG. 13, the first electronic device may receive a notification message sent by the server, so that the first electronic device may determine a second file for which file permission setting is completed. As shown in FIG. 13, an electronic device 2 has set a first permission for a file 4, but an electronic device 3 does not respond to a request message sent by the server. The first electronic device may display a case in which permission setting for a file 5 is not completed. Optionally, as shown in (b) in FIG. 13, when determining that the electronic device 3 is online, an electronic device 1 or an electronic device 2 may display a reminder message. The reminder message may be used to notify the user that the electronic device 3 is online, and query the user whether to attempt to set the file permission for the file 5 to the first permission again.

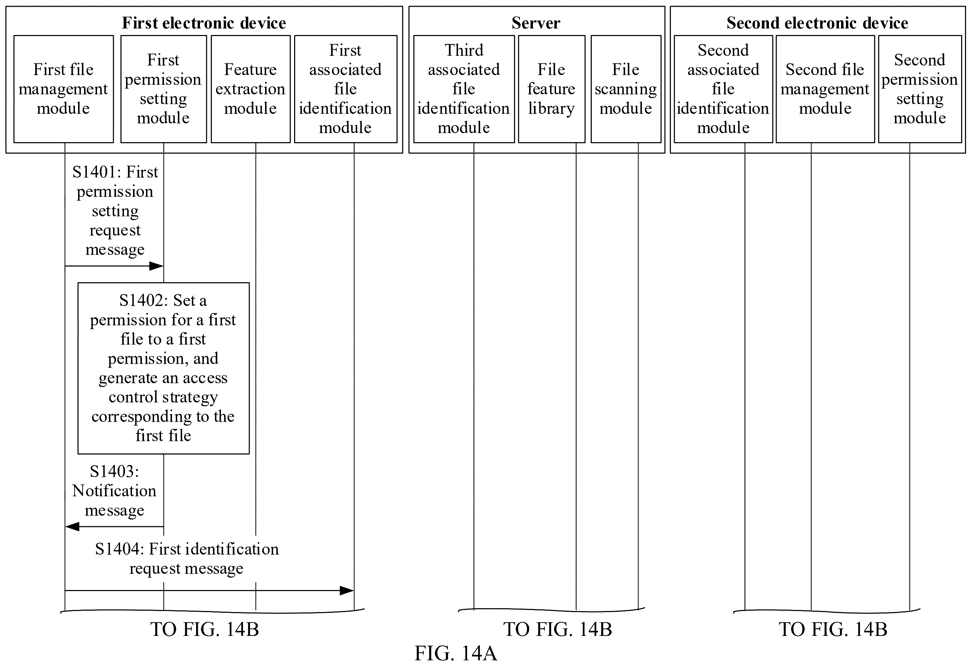

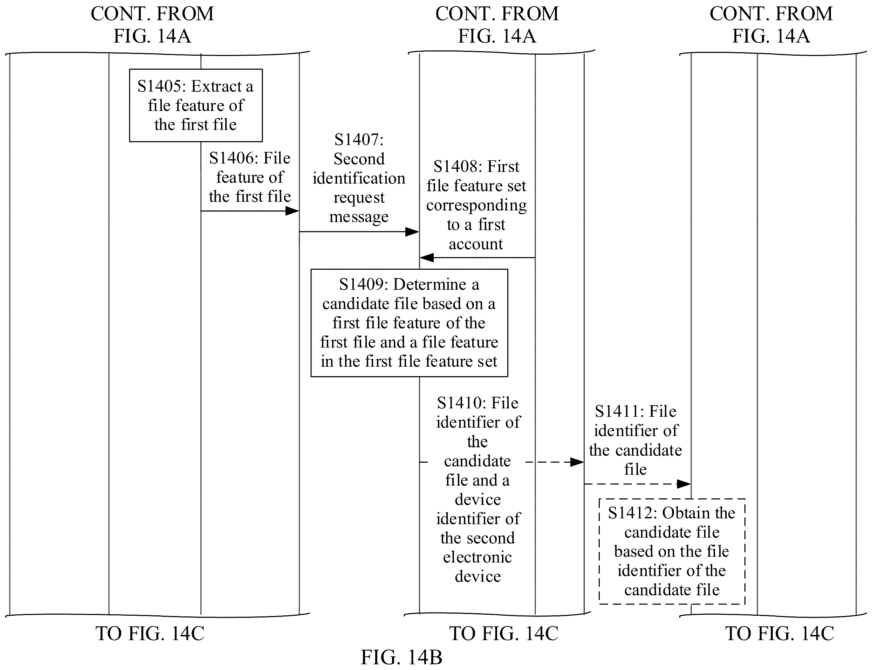

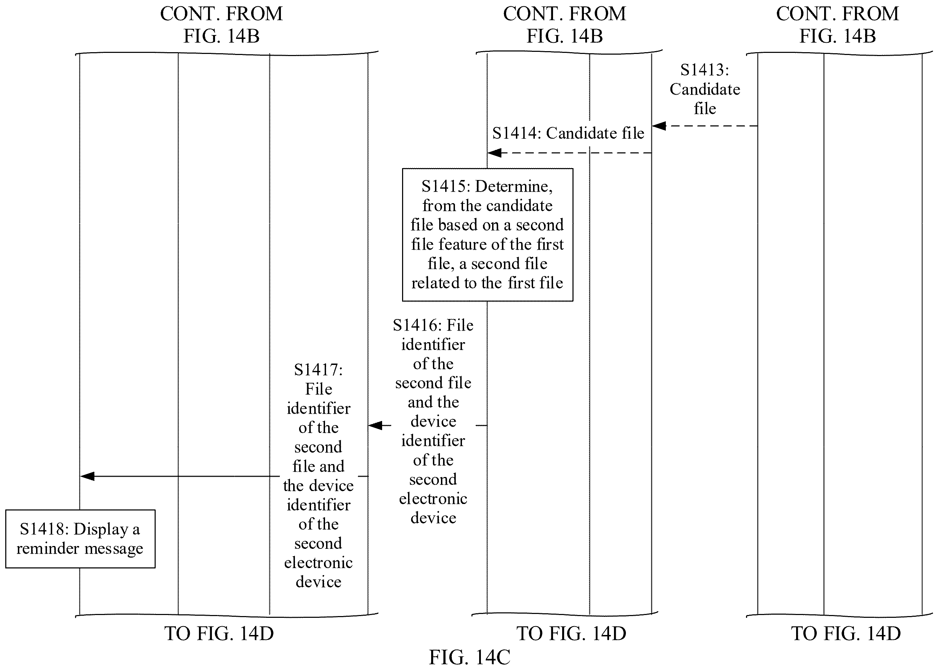

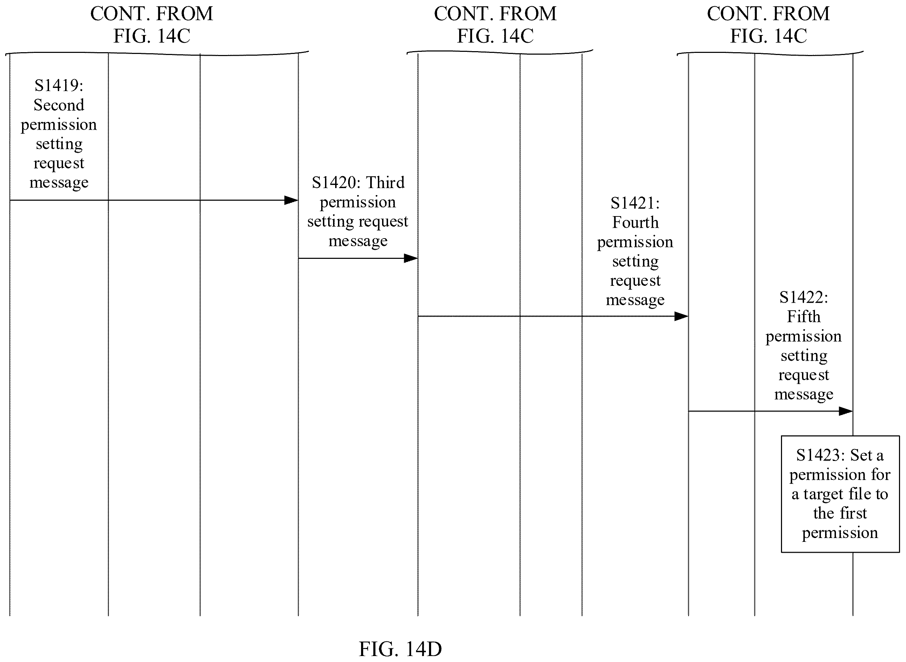

A second permission management method provided in an embodiment of this application may be performed by the first electronic device, the second electronic device, and the server that have the structure shown in FIG. 10. FIG. 14A to FIG. 14D are a flowchart of a second permission management method according to an embodiment of this application. As shown in FIG. 14A to FIG. 14D, the method includes the following steps.

S1401: A first file management module sends a first permission setting request message to a first permission setting module in response to a first operation of a user.

Optionally, the first operation may be an operation of selecting a permission for a first file as a first permission by the user, and the first permission setting request message may be used to request the first permission setting module to set the permission for the first file to the first permission.

S1402: The first permission setting module sets the permission for the first file to the first permission, and generates an access control strategy corresponding to the first file.

S1403: The first permission setting module sends a notification message to the first file management module.

The notification message indicates that the permission setting for the first file is completed, and the notification message may include the access control strategy corresponding to the first file.

S1404: The first file management module sends a first identification request message to a first associated file identification module.

Optionally, the first identification request message is used to request to determine a file related to the first file.

S1405: A feature extraction module extracts a file feature of the first file.

S1406: The feature extraction module sends the file feature of the first file to the first associated file identification module.

S1407: The first associated file identification module sends a second identification request message to a third associated file identification module.

Optionally, the second identification request message is used to request to determine a file related to the first file, and the second identification request message may include a file feature of the first file, the first file, and an access control strategy corresponding to the first file.

S1408: The third associated file identification module obtains, from a file feature library, a first file feature set corresponding to a first account.

S1409: The third associated file identification module determines at least one to-be-determined file based on a first file feature of the first file and a file feature in the first file feature set.

S1410: The third associated file identification module sends a file identifier of the at least one to-be-determined file and a device identifier of the second electronic device to a file scanning module.

S1411: The file scanning module sends the file identifier of the at least one to-be-determined file to a second associated file identification module.

S1412: The second associated file identification module obtains the at least one to-be-determined file based on the file identifier of the at least one to-be-determined file.

S1413: The second associated file identification module sends the at least one to-be-determined file to the file scanning module.

S1414: The file scanning module sends the at least one to-be-determined file to the third associated file identification module.

S1415: The third associated file identification module determines, from the at least one to-be-determined file based on a second file feature of the first file, at least one candidate file related to the first file.

For specific implementations of S1409 and S1415, refer to S503. Repeated details are not described again.

It should be noted that S1410 to S1415 are optional steps. In other words, S1410 to S1415 may not be performed during implementation, and the third associated file identification module may use the to-be-determined file determined in S1409 as a candidate file.

S1416: The third associated file identification module sends a file identifier of the at least one candidate file and the device identifier of the second electronic device to the first associated file identification module.

S1417: The first associated file identification module sends the file identifier of the at least one candidate file and the device identifier of the second electronic device to the first file management module.

S1418: The first file management module displays a reminder message.

The reminder message is used to query the user whether to synchronously set a permission for the candidate file. The reminder message may include information about the at least one candidate file and information about the second electronic device.

S1419: The first file management module sends a second permission setting request message to the first associated file identification module in response to a second operation of the user.

Optionally, the second operation may be an operation of selecting a second file from the at least one candidate file by the user, and the second permission setting request message is used to request to set a permission for the second file.

S1420: The first associated file identification module sends a third permission setting request message to the third associated file identification module.

The third permission setting request message is used to request to set the permission for the second file.

S1421: The third associated file identification module sends a fourth permission setting request message to the second associated file identification module.

The fourth permission setting request message is used to request to set the permission for the second file.

S1422: The second associated file identification module sends a fifth permission setting request message to the second permission setting module.

The fifth permission setting request message is used to request to set the permission for the second file.

S1423: The second permission setting module sets the permission for the second file.

### Embodiment 3

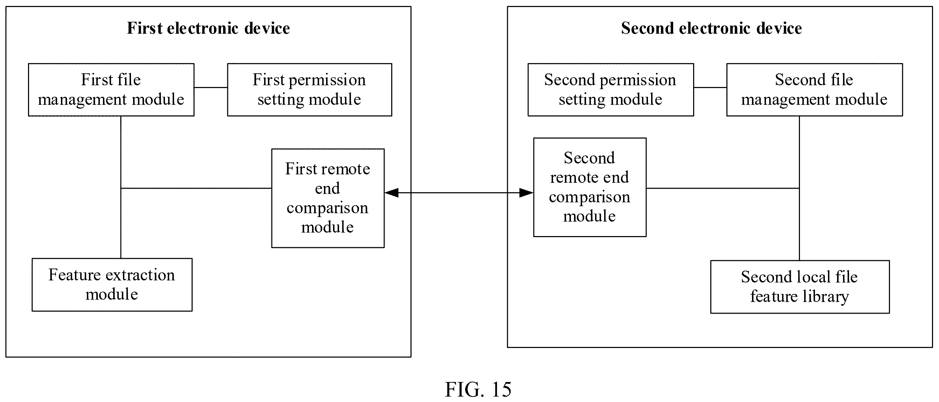

Optionally, when a first electronic device and a second electronic device perform a permission management method provided in embodiments of this application, an architecture of each device may be shown in FIG. 15. As shown in FIG. 15, the first electronic device may include a first file management module, a first permission setting module, a feature extraction module, and a first remote comparison module, and the second electronic device may include a second file management module, a second permission setting module, a second local file feature library, and a second remote comparison module. For functions of the modules, refer to the related descriptions in FIG. 1. Repeated details are not described again.

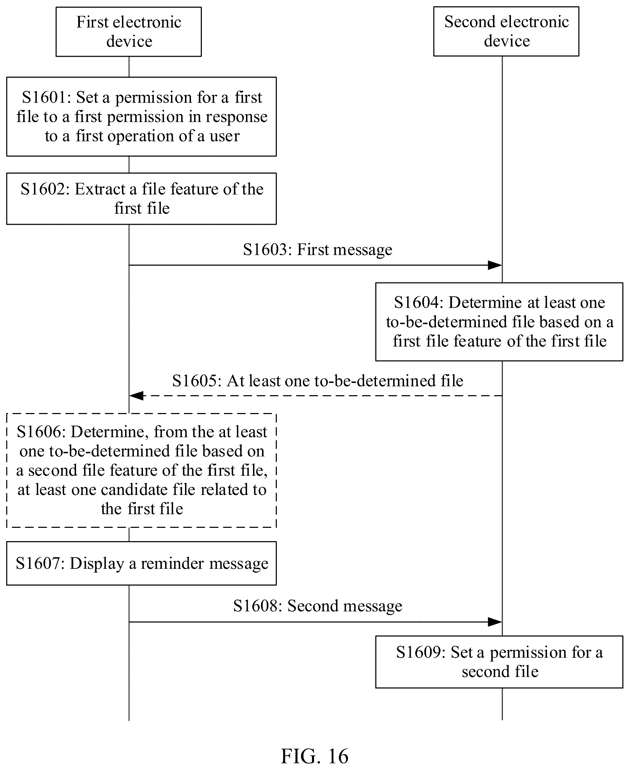

FIG. 16 is a flowchart of a third permission management method according to an embodiment of this application. The method may be performed by a first electronic device and a second electronic device. For example, the method may be performed by a plurality of electronic devices in the file management system shown in FIG. 1. As shown in FIG. 16, the method may include the following steps.

S1601: The first electronic device sets a permission for a first file to a first permission in response to a first operation of a user.

Optionally, the first operation may be an operation that the user selects the permission for the first file as the first permission.

After setting the permission for the first file to the first permission, the first electronic device may store an access control strategy corresponding to the first file. The access control strategy corresponding to the first file may include at least one of the following: a user account identifier, expiration time of the first file, the first permission, an account identifier of an authorized user, and the like. Optionally, after encrypting the access control strategy corresponding to the first file, the first electronic device may store the encrypted access control strategy, to further improve security of permission setting.

S1602: The first electronic device extracts a file feature of the first file.

Optionally, the file feature of the first file may include at least one of the following: a key character, a keyword, an OCR feature, a picture feature, a file paragraph feature, a long text feature, and the like.

S1603: The first electronic device sends a first message to the second electronic device.

Optionally, the first message may be used to request the second electronic device to determine a file related to the first file. The first message may include a first file feature of the first file. The first file feature of the first file may include, for example, at least one of the following: a key character, a keyword, an OCR feature, and a picture feature.

S1604: The second electronic device determines at least one to-be-determined file based on the first file feature of the first file.

In an optional implementation, the second electronic device may compare the first file feature of the first file with a file feature of a file stored in the second electronic device, to determine a first similarity between the first file feature and the file feature of the file stored in the second electronic device. The second electronic device may use, as the to-be-determined file, a file that is in the stored files and whose first similarity between the file feature of the stored file and the first file feature meets a preset condition. For example, the second electronic device may use, as the to-be-determined file, a file whose first similarity is greater than or equal to a first preset threshold.

S1605: The second electronic device sends the at least one to-be-determined file to the first electronic device.

S1606: The first electronic device determines, from the at least one to-be-determined file based on the second file feature of the first file, at least one candidate file related to the first file.

Optionally, the first electronic device may obtain a file feature of the to-be-determined file, and determine the at least one candidate file from the at least one to-be-determined file based on the second file feature of the first file and the file feature of the to-be-determined file. For example, the second file feature of the first file may include, for example, at least one of the following: a picture, a file paragraph feature, and a long text feature. The first electronic device may determine the at least one candidate file based on at least one of the following: a picture similarity, a file paragraph matching degree, picture OCR, and a long text similarity. For the foregoing file comparison manner, refer to the description of S503. Repeated details are not described again.

In some embodiments, S1605 and S1606 are optional steps. The second electronic device may alternatively directly use the to-be-determined file as a candidate file, and send a file identifier of the at least one candidate file to the first electronic device, without performing file comparison between the to-be-determined file and the first file.

S1607: The first electronic device displays a reminder message.

Optionally, the reminder message is used to query the user whether to synchronously set a permission for the candidate file. For example, the reminder message may include information about the at least one candidate file and information about the second electronic device, and the user may select a second file for which the permission needs to be synchronously set.

S1608: The first electronic device sends a second message to the second electronic device in response to a second operation of the user.

Optionally, the second operation is an operation of selecting the second file from the at least one candidate file by the user, and the second file is a part or all of the candidate file. The second message is used to request to set a permission for the second file, and the second message may include a file identifier of the second file.

The first electronic device may determine the second electronic device based on a device identifier corresponding to the second file, and send the file identifier of the second file to the second electronic device.

S1609: The second electronic device sets the permission for the second file.

For S1609 in implementation, refer to S1112. Repeated details are not described again.

It should be noted that the permission management method provided in Embodiment 3 of this application may be combined with the permission management method provided in Embodiment 1. In other words, when the second file selected by the user from the second files includes a file stored in the first electronic device, the first electronic device sets a permission for the file, when the second file includes the file stored in the second electronic device, the first electronic device sends the file identifier of the second file to the second electronic device, and the second electronic device sets the permission for the second file. For specific implementation, refer to Embodiment 1 and Embodiment 2. Repeated details are not described again.

Optionally, after setting the permission for the second file, the second electronic device may send a notification message to the first electronic device, to notify the first electronic device that the permission setting is completed. The first electronic device may display the reminder message. The reminder message is used to notify the user that the permission setting for the second file is completed.

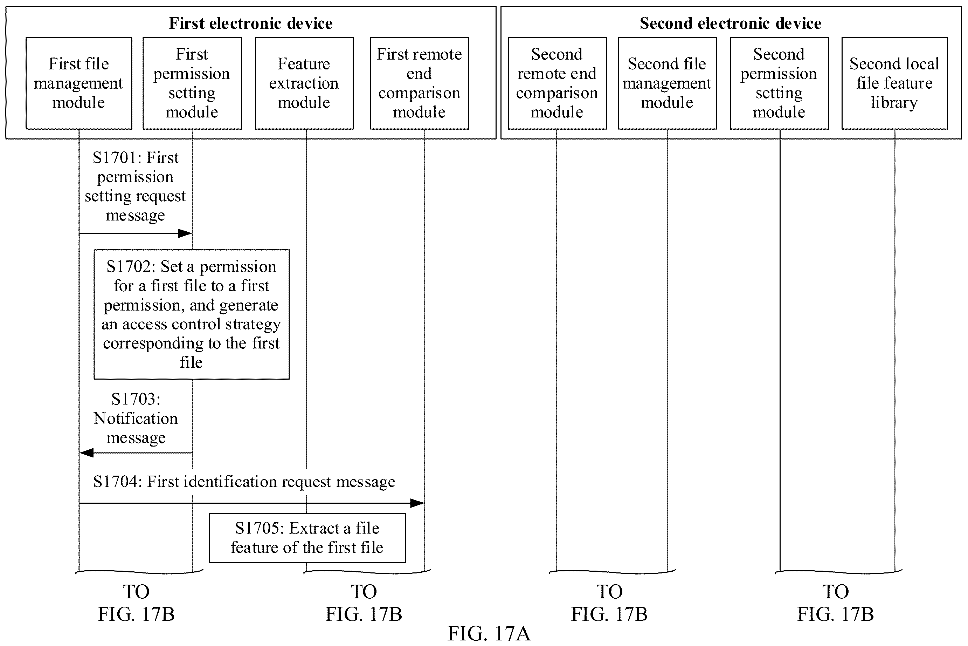

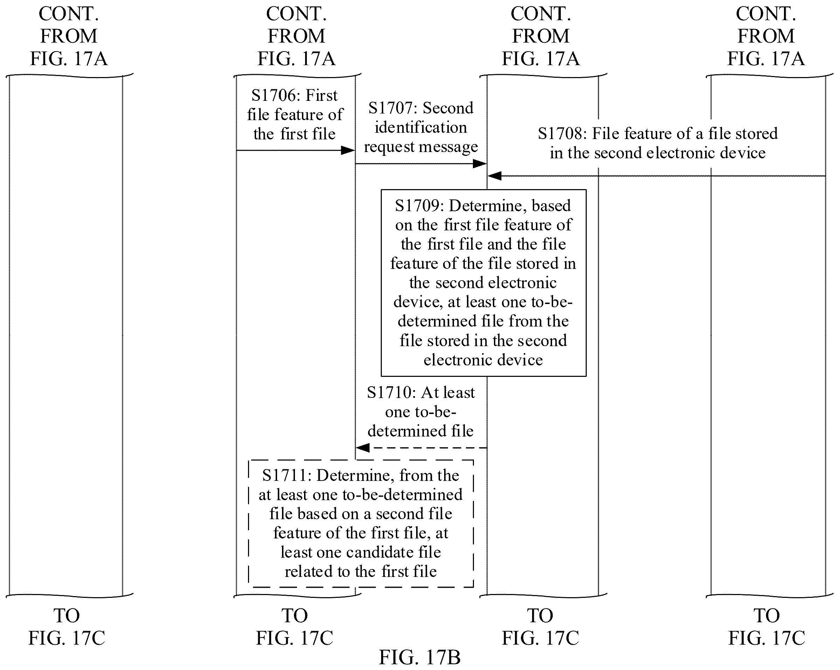

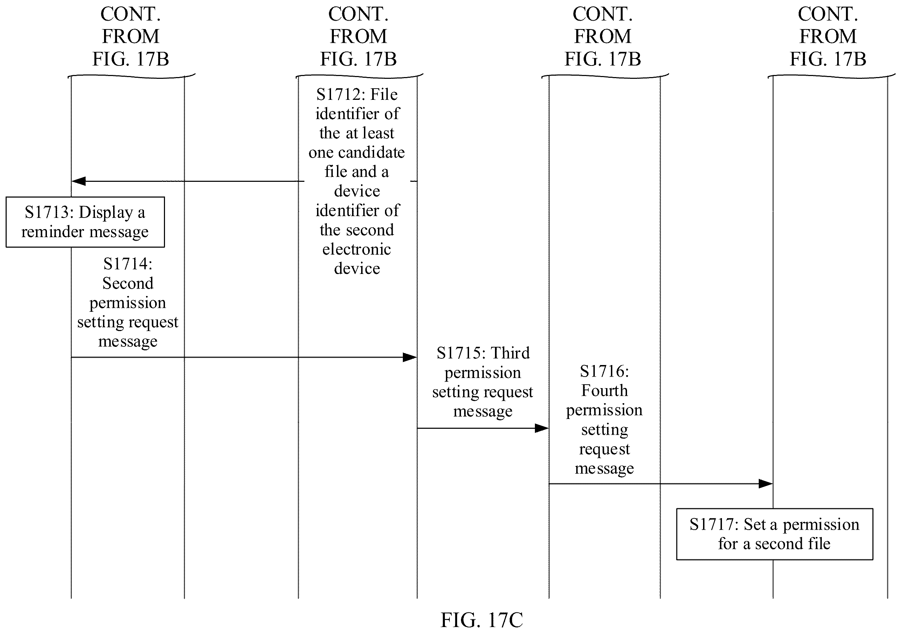

A third permission management method provided in an embodiment of this application may be performed by the first electronic device and the second electronic device that have the structure shown in FIG. 15. FIG. 17A to FIG. 17C are a flowchart of a third permission management method according to an embodiment of this application. As shown in FIG. 17A to FIG. 17C, the method includes the following steps.

S1701: A first file management module sends a first permission setting request message to a first permission setting module in response to a first operation of a user.

Optionally, the first operation may be an operation of selecting a permission for a first file as a first permission by the user, and the first permission setting request message may be used to request the first permission setting module to set the permission for the first file to the first permission.

S1702: The first permission setting module sets the permission for the first file to the first permission, and generates an access control strategy corresponding to the first file.

S1703: The first permission setting module sends a notification message to the first file management module.

The notification message indicates that the permission setting for the first file is completed, and the notification message may include the access control strategy corresponding to the first file.

S1704: The first file management module sends a first identification request message to a first remote comparison module.

Optionally, the first identification request message is used to request to determine a file related to the first file.

S1705: A feature extraction module extracts a file feature of the first file.

S1706: The feature extraction module sends a first file feature of the first file to the first remote comparison module.

S1707: The first remote comparison module sends a second identification request message to a second remote comparison module.

Optionally, the second identification request message is used to request to determine a file related to the first file, and the second identification request message may include a file feature of the first file, the first file, and an access control strategy corresponding to the first file.

S1708: The second remote comparison module obtains, from a second local file feature library, a file feature of a file stored in the second electronic device.

S1709: The second remote comparison module determines, based on the first file feature of the first file and the file feature of the file stored in the second electronic device, at least one to-be-determined file from the file stored in the second electronic device.

S1710: The second remote comparison module sends the at least one to-be-determined file to the first remote comparison module.

S1711: The first remote comparison module determines at least one candidate file from the at least one to-be-determined file based on a second file feature of the first file.

For specific implementations of S1709 and S1711, refer to S503. Repeated details are not described again. In addition, for related descriptions of the file feature of the first file, the first file feature of the first file, and the second file feature of the first file in this embodiment, refer to the foregoing embodiment.

It should be noted that S1710 and S1711 are optional steps. In other words, S1710 and S1711 may not be performed during implementation, and the second remote comparison module may use the to-be-determined file determined in S1709 as the candidate file.

S1712: The first remote comparison module sends a file identifier of the at least one candidate file and a device identifier of the second electronic device to the first file management module.

S1713: The first file management module displays a reminder message.

The reminder message is used to query the user whether to synchronously set a permission for the candidate file. The reminder message may include information about the at least one candidate file and information about the second electronic device.

S1714: The first file management module sends a second permission setting request message to the first remote comparison module in response to a second operation of the user.

Optionally, the second operation may be an operation of selecting a second file from the at least one candidate file by the user, and the second permission setting request message is used to request to set a permission for the second file.

S1715: The first remote comparison module sends a third permission setting request message to the second remote comparison module.

The third permission setting request message is used to request to set the permission for the second file.

S1716: The second remote comparison module sends a fourth permission setting request message to the second permission setting module.

The fourth permission setting request message is used to request to set the permission for the second file.

S1717: The second permission setting module sets the permission for the second file.

According to the permission management method provided in Embodiment 2 or Embodiment 3 of this application, cross-device related file retrieval and cross-device file permission management can be implemented, thereby further improving file permission management and ensuring user data security.

### Embodiment 4

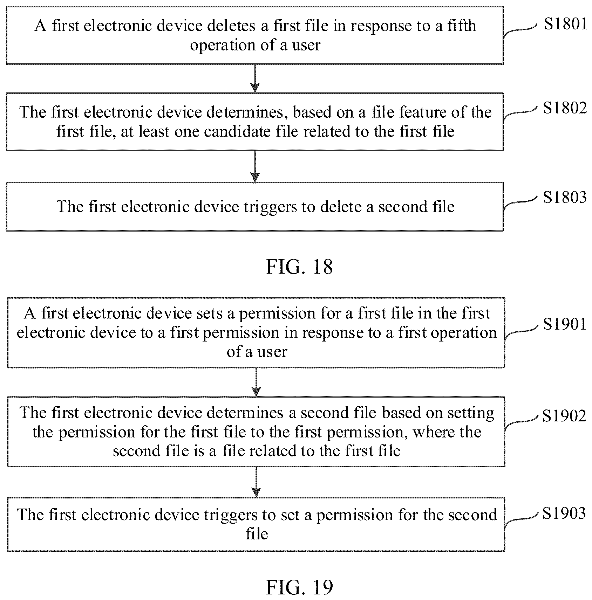

Based on a similar inventive concept, an embodiment of this application further provides a method for synchronously deleting a related file. FIG. 18 is a flowchart of a method for synchronously deleting a related file according to an embodiment of this application. As shown in FIG. 18, the method includes the following steps.

S1801: A first electronic device deletes a first file in response to a fifth operation of a user.

The fifth operation may be an operation triggered by the user to delete the first file.

S1802: The first electronic device determines, based on a file feature of the first file, at least one candidate file related to the first file.

It should be noted that, for S1802, refer to S503 for implementation. Repeated details are not described again.

S1803: The first electronic device triggers to delete a second file.

In an optional implementation, after determining the at least one candidate file related to the first file, the first electronic device may display a reminder message in the first electronic device. The reminder message is used to query the user whether to synchronously delete the candidate file. For example, the reminder message may include information about the at least one candidate file, the user may select the second file that needs to be synchronously deleted.

Optionally, the first electronic device may trigger to delete the second file in response to a sixth operation of the user, where the sixth operation is an operation of selecting the second file from the at least one candidate file by the user, and the second file is a part or all of the candidate file.

Optionally, when the second file belongs to the first electronic device, the first electronic device may delete the second file. When the second file belongs to the second electronic device, the first electronic device may send a request message to the second electronic device, and the second electronic device may delete the second file.

According to the foregoing method, after the user deletes the first file, the first electronic device may synchronously delete the second file related to the first file, so that the user does not need to repeatedly search for and delete a related file, thereby improving user experience.

It may be understood that the method for synchronously deleting a related file provided in Embodiment 4 of this application may alternatively be performed by a file management system including a server and/or another electronic device. For specific implementation, refer to Embodiment 2 and Embodiment 3. Details are not described herein again.

An embodiment of this application further provides a permission management method. The method may be performed by a first electronic device. FIG. 19 is a flowchart of a permission management method according to an embodiment of this application. As shown in FIG. 19. The method includes the following steps.

S1901: A first electronic device sets a permission for a first file in the first electronic device to a first permission in response to a first operation of a user.

S1902: The first electronic device determines a second file based on setting the permission for the first file to the first permission, where the second file is a file related to the first file.

S1903: The first electronic device triggers to set a permission for the second file.

It should be noted that, for specific implementation of the permission management method shown in FIG. 19 in this application, refer to the foregoing embodiments of this application. Repeated details are not described again. In addition, the steps and operations performed in the foregoing described embodiments may be used in a cross manner or in combination on a proper basis based on a specific design, to form a combined implementation solution.

Based on the foregoing embodiments, this application further provides an electronic device. The electronic device includes a plurality of functional modules, the plurality of functional modules interact with each other to implement functions performed by the first electronic device or the second electronic device in the methods described in embodiments of this application. For example, the steps performed by the first electronic device or the second electronic device in the embodiments shown in FIG. 5, FIG. 9A and FIG. 9B, and FIG. 11 are performed. The plurality of functional modules may be implemented based on software, hardware, or a combination of software and hardware, and the plurality of functional modules may be randomly combined or divided based on a specific implementation. For example, the electronic device may include a part or all of functional modules in the electronic device 1 or the electronic device 2 shown in FIG. 1.

Based on the foregoing embodiments, this application further provides an electronic device. The electronic device includes at least one processor and at least one memory. The at least one memory stores computer program instructions. When the electronic device runs, the at least one processor performs functions performed by the first electronic device or the second electronic device in the methods described in embodiments of this application. For example, the steps performed by the first electronic device or the second electronic device in the embodiments shown in FIG. 5, FIG. 9A and FIG. 9B, and FIG. 11 are performed.

Based on the foregoing embodiments, this application further provides a server. The server includes a plurality of functional modules, the plurality of functional modules interact with each other to implement functions performed by the server in the methods described in embodiments of this application. For example, the steps performed by the server in the embodiment shown in FIG. 9A and FIG. 9B are performed. The plurality of functional modules may be implemented based on software, hardware, or a combination of software and hardware, and the plurality of functional modules may be randomly combined or divided based on a specific implementation. For example, the server may include a part or all of the functional modules in the server shown in FIG. 1.

Based on the foregoing embodiments, this application further provides a server. The server includes at least one processor and at least one memory. The at least one memory stores computer program instructions. When the server runs, the at least one processor performs functions performed by the server in the methods described in embodiments of this application. For example, the steps performed by the server in the embodiment shown in FIG. 9A and FIG. 9B are performed.

Based on the foregoing embodiments, this application further provides a file management system. The file management system may include a first electronic device, a second electronic device, and a server. The first electronic device, the second electronic device, and the server may be configured to perform the permission management method described in embodiments of this application.

Based on the foregoing embodiments, this application further provides a computer program product including instructions. When the computer program product runs on a computer, the computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete device.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, and an optical storage) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A permission management method, applied to a first electronic device, wherein the method comprises:
setting a permission for a first file in the first electronic device to a first permission in response to a first operation of a user;
determining a second file based on setting the permission for the first file to the first permission, wherein the second file is a file related to the first file; and
triggering to set a permission for the second file.

2. The method according to claim 1, wherein determining the second file based on setting the permission for the first file to the first permission comprises:
after setting the permission for the first file to the first permission, determining, according to a preset rule, the second file that is the same as or similar to the first file.

3. The method according to claim 1 or 2, wherein triggering to set the permission for the second file comprises:
triggering to set the permission for the second file to the first permission; or
triggering to set the permission for the second file to a second permission, wherein the second permission is a permission set by the user or a permission configured by a system.

4. The method according to any one of claims 1 to 3, wherein determining the second file based on setting the permission for the first file to the first permission comprises:
determining the second file in at least one candidate file in response to a second operation of the user, wherein the at least one candidate file is a file related to the first file.

5. The method according to claim 4, wherein the at least one candidate file comprises at least one of the following: a file related to the first file in the first electronic device and a file related to the first file in a second electronic device.

6. The method according to any one of claims 1 to 5, wherein the method further comprises:
determining at least one candidate file from at least one to-be-compared file based on a file feature of the first file, wherein a similarity between a file feature of the at least one candidate file and the file feature of the first file meets a preset condition, and the at least one to-be-compared file is from at least one of the first electronic device, the second electronic device, and a server.

7. The method according to claim 6, wherein the file feature of the first file comprises at least one of the following: a key character, a keyword, an optical character recognition OCR feature, a picture feature, a file paragraph feature, and a long text feature.

8. The method according to any one of claims 4 to 7, wherein the method further comprises:
sending a first message to the server or the second electronic device, wherein the first message is used to request to determine a file related to the first file; and
receiving information that is about a fourth file and that is sent by the server or the second electronic device, wherein the fourth file is one of the at least one candidate file.

9. The method according to claim 8, wherein the information about the fourth file comprises at least one of the following: a file identifier of the fourth file, a file digest of the fourth file, and data of the fourth file.

10. The method according to any one of claims 4 to 7, wherein the method further comprises:
sending a first message to the server or the second electronic device, wherein the first message is used to request to determine a file related to the first file;
receiving information that is about a fifth file and that is sent by the server or the second electronic device; and
determining, based on the file feature of the first file and the information about the fifth file, that the fifth file is one of the at least one candidate file.

11. The method according to any one of claims 1 to 10, wherein triggering to set the permission for the second file comprises:
setting the permission for the second file; or
sending a second message to the server or the second electronic device, wherein the second message is used to request to set the permission for the second file.

12. The method according to any one of claims 1 to 11, wherein before triggering to set the permission for the second file, the method further comprises:
displaying a first reminder message, wherein the first reminder message is used to query whether to synchronously set the permission for the second file.

13. The method according to claim 12, wherein the first reminder message comprises information about the second file and information about an electronic device to which the second file belongs.

14. The method according to any one of claims 1 to 13, wherein the method further comprises:
determining that a third electronic device is online, and a sixth file in the third electronic device is a file related to the first file; and
triggering to set a permission for the sixth file.

15. The method according to claim 14, wherein before triggering to set the permission for the sixth file, the method further comprises:
displaying a second reminder message, wherein the second reminder message is used to query whether to set the permission for the sixth file.

16. The method according to any one of claims 1 to 15, wherein the method further comprises:
setting the permission for the first file to a third permission in response to a third operation of the user; and
triggering to set the permission for the second file.

17. The method according to any one of claims 1 to 16, wherein the second file belongs to the first electronic device, and the method further comprises:
setting the permission for the second file to a fourth permission in response to a fourth operation of the user.

18. The method according to claim 17, wherein the method further comprises:
triggering to set a permission for the first file.

19. The method according to any one of claims 1 to 18, wherein the method further comprises:
receiving a third message sent by the third electronic device, wherein the third message is used to request to determine a file related to a seventh file in the third electronic device;
determining, based on a file feature of the seventh file, a file related to the seventh file from files stored in the first electronic device; and
sending information about a file related to the seventh file to the third electronic device.

20. The method according to any one of claims 1 to 19, wherein the method further comprises:
receiving a fourth message sent by the third electronic device, wherein the fourth message is used to request to set a permission for an eighth file in the first electronic device to a fifth permission; and
setting the permission for the eighth file to the fifth permission.

21. A permission management method, applied to a server, wherein the method comprises:
receiving a first message sent by a first electronic device, wherein the first message is used to request to determine a file related to a first file in the first electronic device; and
sending information about a fourth file to the first electronic device, wherein the fourth file is the file related to the first file.

22. The method according to claim 21, wherein the information about the fourth file comprises at least one of the following: a file identifier of the fourth file, a file digest of the fourth file, and data of the fourth file.

23. The method according to claim 21 or 22, wherein the method further comprises:
receiving a second message sent by the first electronic device, wherein the second message is used to request to set a permission for a second file; and
sending a fifth message to a second electronic device, wherein the fifth request message is used to request to set a permission for the second file, and the second electronic device is an electronic device to which the second file belongs.

24. The method according to any one of claims 21 to 23, wherein before sending the information about the fourth file to the first electronic device, the method further comprises:
determining the fourth file based on a file feature of the first file and a file feature of at least one file stored in the server, wherein a similarity between a file feature of the fourth file and the file feature of the first file meets a preset condition.

25. The method according to claim 24, wherein the file feature of the first file comprises at least one of the following: a key character, a keyword, an optical character recognition OCR feature, a picture feature, a file paragraph feature, and a long text feature.

26. An electronic device, comprising at least one processor, wherein the at least one processor is coupled to at least one memory, and the at least one processor is configured to read a computer program stored in the at least one memory, to perform the method according to any one of claims 1 to 20.

27. A server, comprising at least one processor, wherein the at least one processor is coupled to at least one memory, and the at least one processor is configured to read a computer program stored in the at least one memory, to perform the method according to any one of claims 21 to 25.

28. A computer-readable storage medium, wherein the computer-readable storage medium stores instructions, and when the instructions are run on a computer, the computer is enabled to perform the method according to any one of claims 1 to 20 or to perform the method according to any one of claims 21 to 25.
